# EUROPEAN PATENT APPLICATION

(11) **EP 3 450 513 A1**
(43) Date of publication of application: **06.03.2019**
(21) Application number: 16900519.6
(22) Date of filing: 30.05.2016
(51) Int. Cl.: C09D 11/17, B43K 7/00, C09D 11/18

(54) **GLITTERING WRITING/DRAWING MATERIAL COMPOSITION, AND WRITING/DRAWING IMPLEMENT**

(30) Priority: 28.04.2016 JP 2016089972
(71) Applicant: PENTEL KABUSHIKI KAISHA, Chuo-ku Tokyo 103-8538 (JP)
(72) Inventor: OTSUBO, Aya, Soka-shi Saitama 340-0017 (JP); YOSHIKAWA, Katsunori, Soka-shi Saitama 340-0017 (JP); SHIMIZU, Hideaki, Soka-shi Saitama 340-0017 (JP); HATSUYA, Hirokatsu, Omitama-shi Ibaraki 311-3497 (JP); FURUYA, Yoshinori, Omitama-shi Ibaraki 311-3497 (JP)
(74) Representative: Ter Meer Steinmeister & Partner
(86) International application number: PCT/JP2016/065940
(87) International publication number: WO 2017/187649

(57) **Abstract**

A glittering writing/drawing material composition includes a solvent, a lustrous particle having metallic luster and dispersed in the solvent, and at least one dye dissolved in the solvent. A hue difference between a first hue and a second hue is 108° or less in a hue circle in a Munsell color system, where the first hue is measured on the lustrous particle in a solid state with a spectrocolorimeter, and the second hue is measured on a liquid composition obtained by removing the lustrous particle from the glittering writing/drawing material composition and applied on a white wood-free paper with the spectrocolorimeter. The lustrous particle has a coverage of 1.0% or more and 70.0% or less on a surface layer of a drawing object formed by the glittering writing/drawing material composition.

## Description

### TECHNICAL FIELD

The present disclosure relates to a glittering writing/drawing material composition and a writing/drawing instrument.

### BACKGROUND ART

It has been conventionally known to use a writing/drawing material composition containing metallic lustrous particles for a writing/drawing material which enables visually brilliant and impressive drawing.

For instance, Patent Document 1 and Patent Document 2 each disclose an ink composition in which metallic lustrous particles such as a pearl pigment or a hologram pigment are added into an ink, which creates a writing with a different impression depending on a viewing angle attributable to the metallic lustrous particles.

Patent Document 3 discloses an ink combining a chromatically colored metallic lustrous flaky particles with a colorant having a different hue from that of the colored metallic lustrous flaky particles to obtain an interesting writing in which a color different from that of the writing sparkles. Citation List of Patent Literature

Patent Document 1: JP2003-253187A; Patent Document 2: JP2007-031688A; Patent Document 3: JP2003-012973A

### SUMMARY

### Problems to be Solved

Patent Document 1 and Patent Document 2 disclose a technique in which hue change depending on a viewing angle and glitter of a writing are obtained only by hue change depending on a viewing angle and glitter of viewing-angle-dependent particles. In this technique, the writing needs to be completely covered with the viewing-angle-dependent particles to obtain sufficient glitter and hue change depending on the viewing angle. However, since the addition amount of the viewing-angle-dependent particles affects the amount of solid contents in the ink, sufficient glittering change and hue change cannot be achieved in some case with a practical addition amount such that the viscosity of the ink does not degrade and precipitation and agglomeration of the viewing-angle-dependent particles do not occur.

The ink disclosed in an example of Patent Document 3 can provide an interesting writing owing to hue difference between flaky particles and a base material. That is, one who sees a writing written with this ink simultaneously perceives the hue of the base material and the glittering hue of the metallic lustrous flaky particles, which leads to a view in which a color different from the base sparkles in the writing. However, this ink cannot provide a pleasant writing having a strong glitter and a color tone seamlessly changing with a viewing angle.

An object of at least some embodiments of the present invention is to provide a glittering writing/drawing material composition and a writing/drawing instrument which pleases the eye by a color tone seamlessly changing with a viewing angle.

### Solution to the Problems

(1) A glittering writing/drawing material composition according to at least some embodiments of the present invention comprises: a solvent; a lustrous particle having metallic luster and dispersed in the solvent; and at least one dye dissolved in the solvent, wherein a hue difference between a first hue and a second hue is 108° or less in a hue circle in a Munsell color system, where the first hue is measured on the lustrous particle in a solid state with a spectrocolorimeter, and the second hue is measured on a liquid composition applied on a white wood-free paper with the spectrocolorimeter, the liquid composition being obtained by removing the lustrous particle from the glittering writing/drawing material composition, and wherein the lustrous particle has a coverage of 1.0% or more and 70.0% or less on a surface layer of a drawing object formed by the glittering writing/drawing material composition.
   Herein, the "writing/drawing material" means a material with which a drawing object can be written or drawn. The "drawing object" means a solid obtained by writing or drawing with the writing/drawing material.
   Herein, the "hue circle" means a hue circle chart in the Munsell color system, in conformity to "JIS Z 8712, JIS standard color chart" of the Japan industry standards (JIS). Herein, the "hue difference" means an angle (≤180°) between the first hue and the second hue on the hue circle of the hue circle chart in the Munsell color system.
   The hue of the lustrous particle having metallic luster is defined as a H value of a Munsell value HV/C measured in the following procedure: the lustrous particle having metallic luster in a solid state is laid in a thickness of about 1 mm into a circular cell having a diameter of 30 mm (a cell equipped in a spectrocolorimeter, Spectrophotometer SE6000 manufactured by Nippon Denshoku Industries Co., Ltd.); a white wood-free paper (a white test paper described in JIS S6061) is brought into close contact with a circular end portion of the cell opposite to a measurement portion; and the Munsell value HV/C is measured under the conditions of C light source, 2-degree field of view, illumination 0°, light receiving 45° (circumference), and a measurement diameter of 6 mm.
   Also, herein the hue of the liquid composition obtained by removing the lustrous particle from the glittering writing/drawing material composition is defined as a H value of a Munsell value HV/C measured in the following procedure: the lustrous particle is removed from the glittering writing/drawing material composition to prepare the liquid composition containing only the dye as the coloring components; the liquid composition is applied onto a white wood-free paper (a white test paper described in JIS S6061) with a 0.2-mm bar coater and then dried; and the Munsell value HV/C is measured on the liquid composition coated portion under the conditions of C light source, 2-degree field of view, illumination 0°, light receiving 45° (circumference), and a measurement diameter of 6 mm.
   Also, herein, the coverage of the lustrous particle on the surface layer of the drawing object is an average of three point measurement each given by, for instance, drawing a spiral line of about 10 cm per round under the conditions of a writing angle of 70°, a writing speed of 7 cm/s, a writing load of 981 mN, with pen rotation; taking a picture of the drawn line with an optical microscope (Digital microscope VHX-2000 manufactured by KEYENCE Co., Ltd.) at 400x magnification; measuring the areas of the whole drawn line and the metallic lustrous particle on the picture with an area measurement tool equipped in the measurement device; and calculating the proportion of the metallic lustrous flaky particle to the whole drawn line.
   In the drawing object obtained with the writing/drawing material composition containing the lustrous particle and the dye, the dye dissolved in the solvent soaks into a drawn object (e.g., paper) to form a base, and the lustrous particle not soaking into the drawn object but filtered is mainly distributed over the surface layer of the drawing object. In this regard, the present inventors have intensively studied and consequently found that appropriately setting the hue difference between the hue (first hue) of the lustrous particle having metallic luster and the hue (second hue) of the liquid composition obtained by removing the lustrous particle from the glittering writing/drawing material composition as well as the coverage of the lustrous particle on the surface layer of the drawing object enables seamless viewing angle dependence of color tone of the drawing object through the coloring mechanism attributable to the lustrous particle distributed over the surface layer of the drawing object.
   The above configuration (1) is based on findings of the present inventors. In this configuration, the hue difference between the hue (first hue) of the lustrous particle having metallic luster and the hue (second hue) of the liquid composition obtained by removing the lustrous particle from the glittering writing/drawing material composition is 108° or less in the hue circle in the Munsell color system. This makes a boundary portion between the lustrous particle and the colored portion by the liquid composition based on the dye inconspicuous in a writing. Thus, since discontinuous hue change between the lustrous particle and the base is hard to be perceived, it is possible to prevent the reduction in harmony between the hue of the lustrous particle and the hue of the base. Additionally, since the lustrous particle has a coverage of 1.0% or more and 70.0% or less on the surface layer of the drawing object, the structural color can be effectively obtained by the lustrous particle arranged on the surface layer of the drawing object. In this way, continuous change in the reflected light amount depending on the viewing angle attributable to the lustrous particle having metallic luster is synergistically mixed and perceived with the coloring of the dye which transmits the reflected light, so that the drawing object can achieve seamless viewing angle dependence of color tone.
(2) In some embodiments, the hue difference is 5° or more in the hue circle.
   In the above configuration (2), the hue difference between the hue (first hue) of the lustrous particle and the hue (second hue) of the liquid composition is 5° or more in the hue circle. Thus, the color of the lustrous particle is substantially different from the color of the base, and the color (structural color) due to the lustrous particle having seamless viewing dependence is mixed with the color of the base. This gives fresh impression to a viewer.
(3) In some embodiments, in the above configuration (1) or (2), the at least one dye includes a dye intramolecularly having at least one of: a structural part represented by -SO3-M, where M is one selected from the group consisting of hydrogen ions, alkali metal ions, alkaline earth metal ions, transition metal ions, ammonium ions, and organic ammonium ions; a structural part represented by -COO-M, where M is one selected from the group consisting of hydrogen ions, alkali metal ions, alkaline earth metal ions, transition metal ions, ammonium ions, and organic ammonium ions; or a hydroxyl group.
   In the above configuration (3), the dye intramolecularly having at least one of a structural part represented by -SO3-M or -COO-M, or a hydroxyl group is adsorbed to the lustrous particle and thereby improves dispersion stability of the lustrous particle. This inhibits agglomeration of the lustrous particle and keeps the lustrous particle dispersed on the surface layer of the drawing object. Thus, it is possible to effectively achieve seamless viewing angle dependence of color tone of the drawing object. Further, it is possible to reduce degradation of the glittering writing/drawing material composition (color loss of the drawing object due to agglomeration of the lustrous particle) through a prolonged storage.
(4) In some embodiments, in any one of the above configurations (1) to (3), the at least one dye includes an azo dye, a disazo dye, an anthraquinone dye, a xanthene dye, a triphenylmethane dye, or an indigo dye.
   In the above configuration (4), the dispersion stability of the lustrous particle is more effectively improved by the adsorption action of the dye to the lustrous particle surface. Thus, it is possible to effectively achieve seamless viewing angle dependence of color tone of the drawing object.
(5) In some embodiments, in any one of the above configurations (1) to (4), the lustrous particle has a flaky shape.
   In the above configuration (5), the use of the flaky lustrous particle makes it easy to orient the lustrous particle in a particular direction, thus effectively providing a brilliant color due to the structural color.
(6) In some embodiments, in any one of the above configurations (1) to (5), the lustrous particle includes at least one of a crushed piece of a metal vapor deposition film, a glass flake, or an aluminum flake.
   In the above configuration (6), since the lustrous particle including at least one of a crushed piece of a metal vapor deposition film, a glass flake, or an aluminum flake is used, the lustrous particle oriented on the surface layer of the drawing object effectively provides a brilliant color due to the structural color.
(7) In some embodiments, in any one of the above configurations (1) to (6), a content of the lustrous particle is 0.1 wt % or more and 10.0 wt % or less.
   In the above configuration (7), since the content of the lustrous particle is 0.1 wt % or more, the structural color of the lustrous particle is exhibited. Further, when the content lustrous particle is 10.0 wt % or less, it is possible to inhibit agglomeration of the lustrous particle and stably achieve seamless viewing angle dependence of color tone of the drawing object.
(8) In some embodiments, in any one of the above configurations (1) to (7), a content of the dye is 0.5 wt % or more.
(9) In some embodiments, in any one of the above configurations (1) to (8), the writing/drawing material composition further comprises a thickener.
   When the particle size of the lustrous particle is relatively large (for instance, the particle size is 20 µm or more), this size is 100 times as large as a conventional pigment particle. As the precipitation rate is proportional to the square of the particle size, the precipitation rate of the lustrous particle is extremely increased compared with the precipitation rate of the conventional pigment particle.
   In this regard, in the above (9), the addition of the thickener inhibits precipitation of the lustrous particle in the writing/drawing material and enables the writing/drawing material to be stably used over a prolonged period.
(10) In some embodiments, in the above configuration (9), the thickener at least includes one selected from the group consisting of polysaccharides, celluloses, acrylic resins, and water-soluble synthetic polymers.
   In the above configuration (10), the thickener including polysaccharides, celluloses, acrylic resins, or water-soluble synthetic polymers is adsorbed to the lustrous particle and thereby improves dispersion stability of the lustrous particle. This inhibits agglomeration of the lustrous particle and keeps the lustrous particle dispersed on the surface layer of the drawing object. Thus, it is possible to effectively achieve seamless viewing angle dependence of color tone of the drawing object. Further, it is possible to reduce degradation of the glittering writing/drawing material composition (color loss of the drawing object due to agglomeration of the lustrous particle) through a prolonged storage.
(11) In some embodiments, in the above configuration (9) or (10), the thickener at least includes xanthan gum and welan gum.
   As a result of extensive studies, the present inventors found that when xanthan gum and welan gum are used in combination, both gums form a three-dimensional network structure having a relatively small and uniform pore size, thus yielding a smooth drawing object without writing blur.
   The above configuration (11) is based on the above findings of the present inventors. The combination of the thickener including xanthan gum and welan gum enables both reduction in writing blur and prevention in agglomeration of the lustrous particle.
(12) In some embodiments, in any one of the above configurations (1) to (11), the writing/drawing material composition further comprises an antioxidant.
   In the above configuration (12), the addition of the antioxidant inhibits degradation of glitter attributable to oxidation of the lustrous particle.
(13) In some embodiments, in the above configuration (12), the antioxidant includes a hydroquinone compound.
   The hydroquinone compound can retain glitter through a hydroxyl group of the hydroquinone compound adsorbed to the lustrous particle in the writing/drawing material. In addition, its strong antioxidant effect can inhibit degradation due to light or heat even in a dried drawing object. Thus, the hydroquinone compound shows high inhibition effect for not only time-dependent degradation of glitter of the lustrous particle in the writing/drawing material but also time-dependent degradation of glitter of the lustrous particle in a dried drawing object after drawing. The hydroquinone compound may be for instance, potassium hydroquinonesulfonate.
   In the above configuration (13), it is possible to retain glitter in the writing/drawing material and in a drawing object after drawing over a prolonged period.
(14) A glittering writing/drawing instrument according to at least some embodiments of the present invention comprises: a writing/drawing part; and a writing/drawing material storage part storing a glittering writing/drawing material composed of the glittering writing/drawing material composition with at least one of the above configurations (1) to (13), wherein the glittering writing/drawing material is supplied from the writing/drawing material storage part to the writing/drawing part.

In the above configuration (14), it is possible to provide a drawing object which pleases the eye by a color tone seamlessly changing with the viewing angle.

### Advantageous Effects

According to at least some embodiments of the present invention, it is possible to provide a drawing object which pleases the eye by a color tone seamlessly changing with the viewing angle.

### BRIEF DESCRIPTION OF DRAWINGS

FIG. 1 is a vertical cross-sectional view of a writing/drawing instrument according to an embodiment.
FIG. 2 is a vertical cross-sectional view of a refill used in the writing/drawing instrument shown in FIG. 1.
FIG. 3 is an enlarged cross-sectional view showing I part in FIG. 2.
FIG. 4 is a vertical cross-sectional view of a ballpoint pen tip for test.
FIG. 5 is a cross-sectional view taken along line II-II' in FIG. 4.
FIG. 6 is a cross-sectional view taken along line III-III' in FIG. 4.
FIG. 7 is a table showing writing evaluation results in Examples and Comparative Examples.

### DETAILED DESCRIPTION

Embodiments of the present invention will now be described in detail with reference to the accompanying drawings. It is intended, however, that details described in the embodiments or shown in the drawings shall be interpreted as illustrative only and not intended to limit the scope of the present invention.

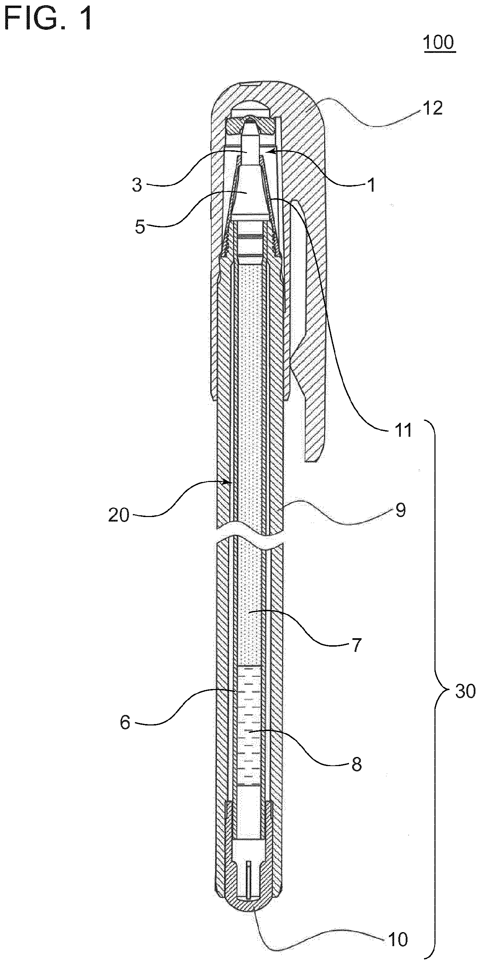

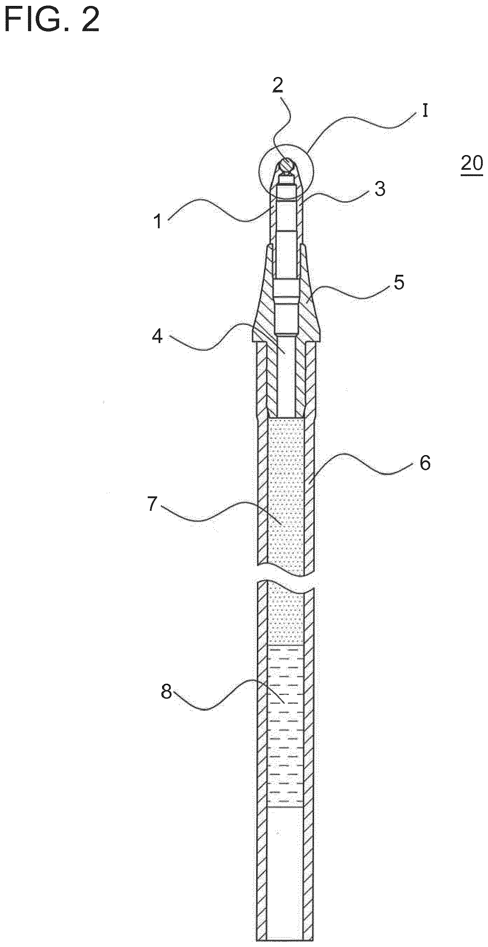

FIG. 1 is a vertical cross-sectional view of a writing/drawing instrument according to an embodiment. FIG. 2 is a vertical cross-sectional view of a refill portion of the writing/drawing instrument shown in FIG. 1.

As shown in FIGs. 1 and 2, the writing/drawing instrument 100 includes a ballpoint pen tip 1 as a writing/drawing part and a writing/drawing material storage tube 6 as a writing/drawing material storage part storing a writing/drawing material 7 to be supplied to the ballpoint pen tip 1 (writing/drawing part).

While in the embodiment shown in FIGs. 1 and 2 the writing/drawing instrument 100 is a ballpoint pen, the writing/drawing instrument 100 is not particularly limited thereto and may be any writing/drawing instrument having a structure capable of drawing, such as a brush pen or a marker, in other embodiments. Moreover, while the writing/drawing material 7 is a ballpoint pen ink in the embodiment shown in FIGs. 1 and 2, it may be a marker ink or a brushing pen ink in other embodiments.

In the exemplary embodiment shown in FIGs. 1 and 2, the writing/drawing instrument 100 includes a refill 20 and an external body 30.

As shown in FIG. 2, the refill 20 includes a ballpoint pen tip 1 having a ball 2 and a ball holder 3 rotatably holding the ball 2, and a writing/drawing material storage tube 6 connected to the ballpoint pen tip 1 via a tip holder 5 having a through hole 4. The ball holder 3 is configured to hold the ball 3 in a state where the ball partially projects from a tip end opening of a writing/drawing material passing hole formed in the ball holder 3. Within the writing/drawing material storage tube 6, the writing/drawing material 7 is stored, and a writing/drawing material backflow preventer 8 immiscible with the writing/drawing material 7 is disposed in contact with a back-end interface of the writing/drawing material 7. A component such as a tail plug for preventing the leakage of the writing/drawing material 7 may be placed at a back end of the writing/drawing material storage tube 6 of the refill 20 to obtain a ballpoint pen body without the external body 30.

In the embodiment shown in FIG. 1, the external body 30 includes a shaft cylinder 9, a tail plug 10 press-fitted into a back end of the shaft cylinder 9, and a metal tip 11 screwed into a front end of the shaft cylinder 9. The shaft cylinder 9 and the tail plug 10 are each provided with a circumferential rib, whereby they are fixed to each other by press fitting.

The shaft cylinder 9 may be made of a transparent resin material (e.g., acrylic styrene resin). The plug tail may be made of a polyethylene resin. The metal tip 11 may be made of brass. The metal tip 11 may be subjected to nickel plating and chromate conversion coating.

To the transparent resin material (e.g. acrylic styrene resin) forming the shaft cylinder 9 may be added an aluminum flake in an amount of 0.1 wt % or more and 1.0 wt % or less (e.g., about 0.2 wt %) at molding. Besides the aluminum flake, a glass flake and a pearl pigment may be used alone or in combination of two or more kinds as appropriate. In an embodiment, pigments with different particle sizes may be used in combination. More specifically, three kinds of aluminum flakes, which are formed into a substantially square shape and visually recognized as shining in silver, having a median value of 50 µm, 150 µm, and 200 µm respectively in a particle size distribution with respect to the maximum particle size of one pigment may be used. The aluminum flake is easy to have a uniform particle size by appropriately cutting a sheet on which aluminum is deposited into an aluminum flake pigment. Thus, adding about 0.2 wt % of aluminum flake pigments having multiple particle sizes into the transparent resin material provides a visual effect of depth by perspective attributable to adjacent particles with different sizes. This visual effect is improved by adding an aluminum flake pigment into the writing/drawing material storage tube 6 which forms the refill 20. Further, adding an aluminum flake pigment into an opaque colored resin molding (at least one of the shaft cylinder 9 or the writing/drawing material storage tube 6) also provides the visual effect to some extent. The tail plug 10 may be a molding of an opaque colored polyethylene resin material, and a pearl pigment may be added thereto. The writing/drawing instrument 100 may include a cap 12 detachably attached to the tip end of the shaft cylinder 9.

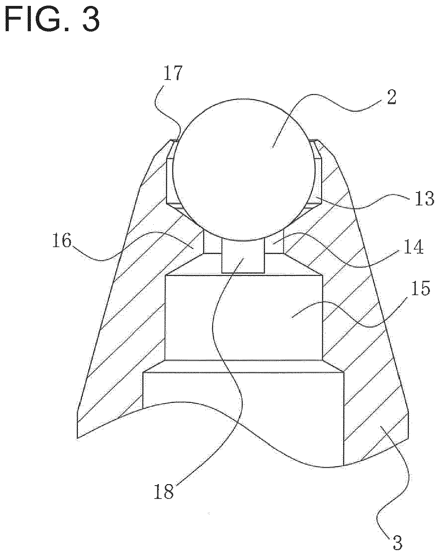

FIG. 3 is an enlarged vertical cross-sectional diagram of I part in FIG. 2, which shows a configuration of the ballpoint pen tip 1 of the refill 20 according to an embodiment.

In the exemplary embodiment shown in FIG. 3, the ball holder 3 has a through hole, serving as a writing/drawing material passage, formed in a metallic cylindrical material by a drill or the like. The ball holder 3 includes a ball housing part 13, a middle hole 14, and a back hole 15 arranged in this order from the tip. Between the ball housing part 13 and the back hole 15, an inward projection 16 is disposed. A tip end opening 17 of the ball housing part 13 is reduced in diameter by swaging. The sweged tip end opening 17 and the inward projection 16 define a range in which the ball 2 can move vertically and horizontally. A plurality of inward projections 16 is annularly disposed at regular intervals, and a space between the adjacent inward projections 16 forms a radial groove 18 through which the writing/drawing material 7 passes. The radial groove 18 is formed by cutting after the ball housing part 13, the middle hole 14, and the back hole 15 are processed. The radial groove 18 penetrates the inward projection 16 and communicate with the back hole 15 to ensure that the writing/drawing material 7 is supplied to the ball housing part 13.

A coil spring may be disposed behind the ball 2 so that the ball 2 is pressed to an inner edge of the tip end opening of the ball holder 3. The writing/drawing material passing hole is thereby sealed when not in use, and thus it is possible to prevent the writing/drawing material from oozing out of the ballpoint pen tip and prevent the writing/drawing material from moving when impact is applied upon dropping or when the pen is left with the tip positioned upward. The load of the coil spring applied to the ball 2 is desirably 0.01 N or more and 1.50 N or less.

In some embodiments, the writing/drawing material 7 is composed of a glittering writing/drawing material composition at least containing a solvent, a lustrous particle having metallic luster and dispersed in the solvent, and at least one dye dissolved in the solvent. Additionally, a hue difference between a first hue and a second hue is 108° or less in a hue circle in a Munsell color system, where the first hue is measured on the lustrous particle in a solid state with a spectrocolorimeter, and the second hue is measured on a liquid composition, which is obtained by removing the lustrous particle from the glittering writing/drawing material composition and applied on a white wood-free paper, with the spectrocolorimeter. Further, the lustrous particle has a coverage of 1.0% or more and 70.0% or less on a surface layer of a drawing object (solid of the writing/drawing material 7) drawn by the glittering writing/drawing material composition.

In the drawing object obtained by the writing/drawing material composition containing the lustrous particle and the dye, the dye dissolved in the solvent soaks into a drawn object to form a base, and the lustrous particle not soaking into the drawn object but filtered is mainly distributed over the surface layer of the drawing object. The lustrous particle distributed over the surface layer of the drawing object strongly or weakly glitters depending on the way the light hits or depending on the viewing angle. Although the hue is not changed alone, the hue is strongly perceived when glitter is strong, and the hue is weakly perceived when glitter is reduced (that is, color production occurs as "structural color").

The "structural color" in a narrow sense means that an object containing no pigment itself but having a structural factor exhibits various colors by reflection and absorption of light. In recent years, this term is widely used even in a case where the object itself contains a pigment and also applied to a case where hue, chroma, brightness, and intensity of the color are differently perceived depending on the viewing angle. Herein, the term "structural color" is used in the latter broad sense.

An object whose color or brilliance is varyingly perceived with the change of the viewing angle through the coloring mechanism of the "structural color" in the broad sense gives an interesting and gorgeous impression to a viewer.

When the hue difference between the hue (first hue) of the lustrous particle having metallic luster and the hue (second hue) of the liquid composition obtained by removing the lustrous particle from the glittering writing/drawing material composition is 108° or less in the hue circle in the Munsell color system, the hue of a boundary portion between the lustrous particle and the colored portion by the dye of the writing/drawing material composition on the base is inconspicuous in a writing. Thus, since discontinuous hue change between the lustrous particle and the base is hard to be perceived, it is possible to prevent the reduction in harmony between the hues of the lustrous particle and the base. Additionally, when the lustrous particle has a coverage of 1.0% or more and 70.0% or less, preferably 4.0% or more and 60.0% or less, on the surface layer of the drawing object, not only the structural color of the lustrous particle distributed over the surface layer of the drawing object is effectively obtainable, but also there is no risk the hue of either the base layer based on the dye or the lustrous particle is strongly perceived alone, and it is possible to easily achieve viewing angle dependence of the glittering hue. In this way, continuous change in the reflected light amount depending on the viewing angle attributable to the lustrous particle having metallic luster is synergistically mixed and perceived with the coloring of the dye which transmits the reflected light, so that the drawing object can achieve seamless tone viewing angle dependence.

The hue difference between the hue (first hue) of the lustrous particle and the hue (second hue) of the liquid composition may be 5° or more in the hue circle in the Munsell color system.

In this case, the color of the lustrous particle is different from the color of the base, and the color (structural color) due to the lustrous particle having seamless viewing angle dependence is mixed with the color of the base. This gives fresh impression to a viewer.

The above hue difference may be 5° or more and 54° or less in the hue circle in the Munsell color system.
This range is preferable because the first hue and the second hue are mutually involved in the hue of the other colorant (i.e., "analogous color" relationship), and it is thereby possible to obtain a writing having comfortable viewing angle dependence due to continuous hue change.

The lustrous particle having metallic luster may be a flaky particle (e.g., a crushed piece of a metal vapor deposition film, a glass flake, or an aluminum flake).
The use of the flaky lustrous particle makes it easy to orient the lustrous particle in a particular direction, thus effectively providing a brilliant color due to the structural color of the lustrous particle.

Examples of the crushed piece of a metal vapor deposition film include "ELgee neo" series (manufactured by Oike Imaging Co., Ltd.) of various colors such as SILVER, R-GOLD, B-GOLD, S-GOLD, RED, BLUE, GREEN, VIOLET, BLACK, COPPER, PINK, and YELLOW with a particle size of #35, #100 (average particle size: 115 µm), #150 (average particle size 95 µm), #200 (average particle size 60 µm), #325 (average particle size 35 µm), or #500 (average particle size 15 µm); and "Diamond Piece" series (manufactured by Daiya Kogyo Co., Ltd.) of various colors such as LG Gold, DG Gold, Green, Blue, Red, Maroon, Ocean Green, Sky Blue, Emerald, Copper, Black, Pink, Violet, and Lavender and of a product number of No.55, H25 (average particle size 100 µm), H55 (average particle size 150 µm), or CO-40UC.

Examples of the glass flake as the aluminum flake include METASHINE MC1030RS (average particle size 30 µm), 1030RY (average particle size 30µm), 1030RR (average particle size 30 µm), 1030RB (average particle size 30 µm), 1030RG (average particle size 30 µm), 1040RS (average particle size 40 µm), 1040RY (average particle size 40 µm), 1040RR (average particle size 40 µm), 1040RB (average particle size 40 µm), 1040RG (average particle size 40µm), 1080RS (average particle size 80 µm), 1080RY (average particle size 80 µm), 1080RR (average particle size 80 µm), 1080RB (average particle size 80 µm), 1080RG (average particle size 80 µm), 1080RS (average particle size 80 µm), METASHINE MC1120RS (average particle size 120 µm), 1120RY (average particle size 120 µm), 1120RR (average particle size 120 µm), 1120RB (average particle size 120 µm), 1120RG (average particle size 120 µm), METASHINE SC1018RS (average particle size 18 µm), 1018RY (average particle size 18 µm), 1018RR (average particle size 18 µm), 1018RB (average particle size 18 µm), 1018RG (average particle size 18 µm), METASHINE MC1030TY (average particle size 30 µm), 1030TZ (average particle size 30 µm), 1030TP (average particle size 30 µm), 1030TA (average particle size 30 µm), 1080TY (average particle size 80 µm), 1080TZ (average particle size 80 µm), 1080TP (average particle size 80 µm), 1080TA (average particle size 80 µm), 1080KY (average particle size 80 µm), 1080KR (average particle size 80 µm), METASH-INEMT1030GP (average particle size 30 µm), and 2080GP (average particle size 80 µm)) (all manufactured by Nippon Sheet Glass Co., Ltd.). Examples of the colored aluminum flake include D452BL (average particle size 11 µm), D462BL (average particle size 14 µm), D851BL (average particle size 23 µm), D451RE (average particle size 11 µm), D462RE (average particle size 14 µm), Dill RE (average particle size 23 µm), D452YE (average particle size 11 µm), D462YE (average particle size 14 µm), D851YE (average particle size 23 µm) (all manufactured by Toyo Aluminium Co., Ltd.); and Paliocrom Brilliant Orange L2850, Paliocrom Gold L2000, Paliocrom Gold L2020, Paliocrom Gold L2035, Paliocrom Orange L2800, Paliocrom Sparkling Red L3505, Paliocrom Copper L3101, Paliocrom Copper L3011, Paliocrom Sparkling Red L3505, Paliocrom Blue Silver L6000, and Paliocrom Blue Silver L6001 (manufactured by BASF Co., Ltd.); these materials may be used in paste.

Among the above lustrous particles (glittering pigments), chromatically colored glass flakes, metal vapor deposition films, and colored aluminum flakes which have visible hue and high glitter are preferable, and chromatically colored metal vapor deposition films, whose glitter is unlikely to degrade over time, are most preferable.

The amount of the lustrous particle having metallic luster is preferably 0.1 wt % or more and 10.0 wt % or less based on the total amount of the writing/drawing material composition, more preferably 2.0 wt % or more and 8.0 wt % or less based on the total amount of the writing/drawing material composition. The lustrous particle in this range provides a highly glittering writing and is in balance with the amount of the dye and the mixture containing the dye on the base. Thus, there is no risk that the hue of either the dye and the mixture containing the dye on the base or the glittering pigment is strongly perceived alone, and it is possible to easily achieve glitter and viewing angle dependence of the hue. Further, clogging of the pen tip due to precipitation of the glittering pigment hardly occurs.

The particle size of the lustrous particle is preferably 20 µm or more and 100 µm or less. This range provides sufficient glitter to the writing and prevents clogging of the pen tip.

In a case where the lustrous particle is flaky, the particle size of the lustrous particle means a maximum length in a plane perpendicular to a thickness direction of the flake of the lustrous particle. For instance, when the lustrous particle is substantially rectangular as viewed from the thickness direction, the length of the long side of the rectangle is defined as the particle size of the lustrous particle.

The at least one dye contained in the writing/drawing material composition is not limited except for the requirement of the hue difference from the lustrous particle and may be any dye, such as acidic dyes, direct dyes, and basic dyes used in conventional water-based writing/drawing materials.
In particular, a dye intramolecularly having at least one of a structural part represented by -SO3-M, where M represents a hydrogen ion, an alkali metal ion, an alkaline earth metal ion, a transition metal ion, an ammonium ion, or an organic ammonium ion; a structural part represented by -COO-M, where M represents a hydrogen ion, an alkali metal ion, an alkaline earth metal ion, a transition metal ion, an ammonium ion, or an organic ammonium ion; or a hydroxyl group is preferably used. In this case, the dye is adsorbed to the glittering pigment, causing a dispersion stability effect. This reduces a writing portion where the glittering pigment is localized and enables one to uniformly perceive a writing portion covered with the glittering pigment and a writing portion not covered with the glittering pigment but dyed with the base dye on a paper, thus easily providing viewing angle dependence and strong glitter. The amount of the dye is preferably 0.5 wt % or more, based on the total amount of the writing/drawing material composition. The dye in this range provides a high dispersion stability effect and thus provides higher viewing angle dependence and stronger glitter.

Illustrative examples of the dye include direct dyes such as C.I. direct black 17, 19, 22, direct fast black AB, 32, 38, 51, 71, C.I. direct yellow 4, 26, 44, 50, C.I. direct red 1, 4, 23, 31, 37, 39, 75, 80, 81, 226, 227, and C.I. direct blue 1, 15, 71, 86, 106, 199; acidic dyes such as C.I. acid black 1, 2, 24, 26, 31, 52, 107, 109, 110, 119, 154, C.I. acid yellow 7: 1, 17, 19, 23, 25, 29, 38, 42, 49, 72, 61, 78, 110, 141, 135, 127, 142, C.I. acid red 8, 9, 14, 18, 26, 27, 35, 37, 51, 52, 57, 82, 87, 92, 94, 111, 129, 131, 138, 186, 249, 254, 265, 276, C.I. acid violet 15, 17, C.I. acid blue 1, 7, 9, 15, 22, 23, 25, 40, 41, 43, 62, 78, 83, 90, 93, 103, 112, 113, 158, and C.I. acid green 3, 9, 16, 25, 27; and basic dyes such as C.I. basic yellow 13, 19, 28, C.I. basic orange 30, 12, 15, 18, 27, C.I. basic violet 10, C.I. basic blue 3, 41, and C.I. basic green 1. Other illustrative examples of the dye include basic dyes such as C.I. basic yellow 11, 15, 21, 51, C.I. basic orange 21, C.I. basic red 1, C.I. basic orange 46, C.I. basic violet 1, C.I. basic violet 3, C.I. basic blue 1, C.I. basic blue 9, 54, C.I. basic green 4, and C.I. basic blown 1.

These dyes may be used alone or in combination in the writing/drawing material.

A writing color obtained by the writing/drawing material using such a dye is perceived as a brilliant hue when the chroma is 5 or more and the brightness is 5 or more. Thus, the hue change depending on the viewing angle is emphasized, and a high visual effect is obtained. To this end, the total amount of the dye in the writing/drawing material composition is desirably made 0.5 wt % or more, based on the total amount of the writing/drawing material composition. On the other hand, the total amount of the dye is preferably less than 10.0 wt %, more preferably less than 5.0 wt %, based on the total amount of the writing/drawing material composition. This range allows one to clearly perceive the hue of the dye depending on the viewing angle even in a writing containing the glittering pigment which highly reflects light, while keeping high chroma and brightness of the writing. Further, this range makes the hue of the glittering pigment conspicuous and provides high glitter and significantly brilliant hue change.

Additionally, the at least one dye contained in the writing/drawing material composition may intramolecularly include an azo dye intramolecularly having a phenyl group, a disazo dye, an anthraquinone dye, a xanthene dye, a triphenylmethane dye, or an indigo dye. In this case, the balance between the hydrophobic group skeleton and the hydrophilic functional group in the molecule is favorable, and a higher dispersion stability effect can be obtained.

The writing/drawing material composition may further contain a pigment in addition to the lustrous particle and the dye.

The pigment is added to the writing/drawing material in order to improve the robustness of a writing. Examples of the pigment includes organic pigments such as azo pigments, nitroso pigments, nitro pigments, basic dye pigments, acidic dye pigments, vat dye pigments, mordant dye pigments, and natural dye pigments; and inorganic pigments such as ocher, barium yellow, Prussian blue, cadmium red, barium sulfate, titanium oxide, red iron oxide, iron black, and carbon black. These pigments may be used alone or in combination appropriately.

When the pigment adheres to the lustrous particle in a writing, the glitter and the hue of the glittering pigment are weakened. Accordingly, the addition amount of the pigment is preferably less than 2.0 wt %, based on the total amount of the writing/drawing material composition, more preferably less than 0.5 wt %, based on the total amount of the writing/drawing material composition to prevent degradation of the glitter and the hue of the glittering pigment. To easily obtain viewing angle dependence of an initial writing, the writing/drawing material may be produced only using the lustrous particle and the dye as the colorant without adding the above pigment. When only the glittering pigment and the dye are used as the colorant, high glitter is obtained by the glittering pigment, and significantly brilliant hue change can be perceived by a bright writing color on the base.

An antioxidant is preferably added to prevent metal from oxidizing in the writing/drawing material and prevent a reduction in glitter. Examples of the antioxidant include hydroquinone compounds, sodium ascorbate, vitamin E, sodium erythorbate, propyl gallate, sodium sulfite, and catechin. In particular, the hydroquinone compounds are preferable for a high effect of preventing not only a time-dependent reduction of glitter in the writing/drawing material but also a time-dependent reduction of glitter in a dried writing after writing. This is because a hydroxyl group in the hydroquinone compound is adsorbed to the lustrous particle, thus exhibiting performance even in a dried writing. Illustrative examples thereof include aryl hydroquinones such as hydroquinone, methylhydroquinone, ethylhydroquinone, dimethylhydroquinone, trimethylhydroquinone, and 2,5-di-tert-butylhydroquinone; polycyclic aromatic hydroquinones such as alizarin, naphthohydroquinone, anthrahydroquinone, and vitamin K; and modified compounds of the above hydroquinones with a substituent including a sulfo group, a sulfonic acid amide group, or a carboxyl group. For instance, hydroquinonesulfonic acid and salts thereof may be mentioned. Above all, potassium hydroquinonesulfonate, which is water-soluble and has excellent adsorption to the lustrous particle and excellent dispersion stability, is preferable.

The hydroquinone compound also exhibits a reducing action for removing oxygen and the like dissolved in the writing/drawing material in order to prevent metal corrosion of the ball and the tip serving as the ball holding part, as conventionally known. The addition amount of the hydroquinone compound is preferably 0.1% wt % or more and 2.0% wt % or less, based on the total amount of the writing/drawing material composition, to obtain a sufficient temporal stability of glitter without inhibiting a leafing effect of the lustrous particle.

The writing/drawing material composition may further contain a thickener. The addition of the thickener inhibits precipitation of the lustrous particle in the writing/drawing material.

As the thickener, at least one of polysaccharides, celluloses, acrylic resins, or water-soluble synthetic polymers may be used. In this case, the thickener including polysaccharides, celluloses, acrylic resins, or water-soluble synthetic polymers is adsorbed to the lustrous particle and thereby improves dispersion stability of the lustrous particle. This inhibits agglomeration of the lustrous particle and keeps the lustrous particle dispersed on the surface layer of the drawing object. Thus, it is possible to effectively achieve seamless viewing angle dependence of color tone of the drawing object. Further, it is possible to reduce degradation of the glittering writing/drawing material composition (color loss of the drawing object due to agglomeration of the lustrous particle) through a prolonged storage.

Illustrative examples thereof include water-soluble synthetic polymers including celluloses such as HPC-SL, HPC-L, HPC-M, HPC-H (hydroxypropyl cellulose, manufactured by Nippon Soda Co., Ltd.), and CEOLUS SC-900, SC-900S, RC591S, RC-N81, RC-N30, CL-611S, DX-2, DX-3, UF-F711, UF-F702, ST-100, ST-02, FD-101, FD-301, FD-F20, Fiber DF-17 (crystalline cellulose, manufactured by Asahi Kasei Co., Ltd.); xanthan gum such as KELZAN, KELZAN S, KELZAN T, KELZAN ST, KELZAN ASX, KELZAN AR, KELZAN HP, KELZAN G, KELTROL CG, KELTROL CG-T, KELTROL CG-SFT (manufactured by Sansho Co., Ltd.) Sun Ace, Sun Ace S, C, C-S, B-S, NF, G, E-S, NXG-S, NXG-C, Bis-Top D-3000-DF, Bis-Top D-3000-DF-C (manufactured by San-Ei Gen F. F. I. Co., Ltd.), and KOHJIN, KOHJIN F, KOHJIN T, KOHJIN K (manufactured by KOHJIN Co., Ltd.); welan gum such as RHEOZAN (succinoglycan, manufactured by Sansho Co., Ltd.), K1A96, BG3810 (manufactured by Sansho Co., Ltd.); rhamsan gum such as K1A112, K7C2433 (manufactured by Sansho Co., Ltd.); guar gum such as JAGUAR 8111, 8600, HP-8, HP-60, CP-13 (manufactured by Sansho Co., Ltd.); crosslinking acrylic resin such as Pullulan (water-soluble polysaccharide, manufactured by Hayashibara Co., Ltd.) RHEOGIC 250H (manufactured by Nippon Junyaku Co., Ltd), JUNLON PW111 (manufactured by Nippon Junyaku Co., Ltd), and U-Jelly CP (manufactured by Showa Denko Co., Ltd.); acrylic acid alkyl methacrylate copolymers such as Carbopol 934, 940, 941, 980, 981, 1342, 1382, 2984, 5984, ETD2020, ETD2050, EZ-1, Pemulen TR-1, Pemulen TR-2 (manufactured by Lubrizol Corp. United States); N-vinylacetamide crosslinking polymers such as GX-205, NA-010 (manufactured by Showa Denko Co., Ltd.).

The addition amount of the thickener may be such an amount that a desired viscosity is obtainable. In a case where the writing/drawing material is directly filled in the writing/drawing material storage tube and used, the viscosity of the writing/drawing material is preferably adjusted within a range of 5000 mPa·s to 50000 mPa·s, more preferably 5000 mPa·s to 30000 mPa·s at a shear rate of 0.35/sec (measurement temperature 25 °C) to achieve both glitter of a writing and anti-precipitation stability of the lustrous particle in the writing/drawing material.

Among the above-described thickeners, the xanthan gum has large shear thinning and is excellent in stability to temperature change, pH, salts, and metal ions. The xanthan gum stabilizes the dispersion of the glittering pigment through a prolonged period and thereby enables each particle of the glittering pigment to be uniformly arranged in a writing, so that the writing has a proper chroma while keeping the writing glittering. Thus, it is possible to easily achieve both viewing angle dependence and strong glitter. To achieve both anti-precipitation stability of the glittering pigment in the writing/drawing material and a writing without blurring, the addition amount of the xanthan gum is preferably 0.1 wt % or more and 2.0 wt % or less, based on the total amount of the writing/drawing material composition, more preferably 0.1 wt % or more and 1.2 wt % or less based on the total amount of the writing/drawing material composition.

Multiple types of the thickeners may be used in combination. In particular, a combination of multiple polysaccharides forms a uniform complex gel in which polymer chains having similar skeletons are tangled, which facilitates satisfying conflict qualities: a writing without blurring in a low temperature environment; and dispersion stability of the glittering pigment over a prolonged period.

Above all, a combination of xanthan gum and welan gum forms a three-dimensional network structure having a small and uniform pore size, thereby providing a smooth writing without blurring. In this case, the addition amount of the gums in the writing/drawing material preferably satisfies a/b = 0.35 or more and 4.0 or less, and a+b = 0.3. wt % or more and 0.7 wt % or less, where a (wt %) is the content of the xanthan gum in the whole writing/drawing material composition, b (wt %) is the content of the welan gum in the whole writing/drawing material composition, a+b is the total content of the xanthan gum and the welan gum in the whole writing/drawing material composition.

When the pH of the writing/drawing material is adjusted to 6.0 or more and 9.0 or less, the time-dependent dissolution stability of the thickener is increased. Consequently, high anti-precipitation stability of the glittering pigment can be obtained.

Various resins may be used in combination as a binder to fix the colorant in the writing/drawing material on the paper surface.

Illustrative examples include water-soluble resins such as shellac, styrene-maleic acid copolymers, styrene-acrylic acid copolymers, salts of styrene-acrylic acid copolymers, alkali metal salts thereof, amine salts thereof, ammonium salts thereof, alkali metal salts of α-methylstyrene-acrylic acid copolymers, amine salts thereof, and ammonium salts thereof Water-insoluble resins such as acrylic resins, vinyl acetate resins, and styrene-butadiene copolymers can also be used. The water-insoluble resin is used in aqueous emulsion form. Above all, the acrylic resins, particularly acrylic emulsion, are preferable in view of adhesion of the metallic lustrous particle to the paper surface and storage stability of the writing/drawing material.

Examples of the solvent for dissolving solid contents such as the dye and the thickener in the writing/drawing material include water and organic solvents including alcohols such as ethanol, 1-propanol, 2-propanol, and butyl alcohol; glycols such as ethylene glycol, 1,2-propanediol, 1,3-butanediol, hexylene glycol, 2-ether-1,3-hexane glycol, glycerin, triethylene glycol, dipropylene glycol, diglycerin, polyethylene glycol, and polypropylene glycol; ethers such as ethylene glycol ethyl ether, ethylene glycol methyl ether, ethylene glycol butyl ether, and diethylene glycol ethyl ether; N-methylpyrrolidone; and 2-phenoxyethanol.

These solvents may be used alone or in combination of two or more kinds as appropriate. The addition amount thereof may be 2.0 wt % or more and 50.0 wt % or less, based on the total amount of the writing/drawing material composition. If the amount is less than 2.0 wt %, a drying prevention effect on an applied portion is poor, and the stability of the writing/drawing material can degrade over a prolonged period. Even if the solvent in an amount of more than 50.0 wt % is added, further improvement of the drying prevention effect cannot be expected.

In addition to the above components, other additives conventionally used for a water-based writing/drawing material for a writing/drawing instrument may be added as needed.

For instance, a sugar alcohol or urea may be used to prevent evaporation of the writing/drawing material. Also, a lubricant such as oleic acid, acylamino acid, acylglutamic acid, phosphate ester, alkali metal salt thereof, or amine salts thereof may be used to improve writing performance.

In particular, acyl glutamic acids, metal salts thereof, amine salts thereof such as N-cocoyl-L-glutamic acid, N-lauroyl-L-glutamic acid, N-stearoyl-L-glutamic acid, sodium N-cocoyl-L-glutamate, sodium N-lauroyl-L-glutamate, potassium N-myristoyl-L-glutamate, sodium N-myristoyl-L-glutamate, sodium N-acyl-L-glutamate, sodium N-stearoyl-L-glutamate, triethanolamine N-cocoyl-L-glutamate solution, triethanolamine lauroyl-L-glutamate solution, potassium N-cocoyl-L-glutamate; alkylphosphoric acids, polyoxyethylene alkylphosphoric acids, metal salts thereof, amine salts thereof such as lauryl phosphate, polyoxyethylene lauryl ether phosphate, polyoxyethylene oleyl ether phosphate, polyoxyethylene stearyl ether phosphoric acid, and polyoxyethylene alkyl (alkyl chain having 12 to 15 carbon atoms) ether phosphoric acid are preferable, in view of a high dispersion stability effect caused by adsorption of a carboxyl group or a phosphate group to the glittering pigment.

Further, surface tension regulators such as anionic, non-ionic, or cationic surfactants, silicone surfactants, fluorinated surfactants; preservatives such as sodium dehydroacetate, 1,2-benzisothiazolin-3-one, and sodium 2-pyridinethiol-1-oxide; rust inhibitors such as benzotriazole and ethylenediaminetetraacetic acid; silicone- or fluorine-based defoaming agents; and alkalizing agents such as sodium hydroxide, alkanolamine, amine, and ammonium as pH adjuster may be added.

As a production method of the writing/drawing material, various conventionally known methods may be adopted. For instance, the material may be produced with an apparatus such as a ball mill, a bead mill, a roll mill, a Henschel mixer, a propeller stirrer, a homogenizer, or a kneader. Coarse particles and air may be removed by filtering or centrifugation. Heating, cooling, pressurizing, depressurizing, or inert gas replacement may be performed during production. The power may be electric power or pressurized air. They may be used alone or in combination.

### Working example

Formulation examples of the writing/drawing material composition are shown below. Hereinafter, the formulation amount is expressed by weight percent (wt %).

### (Example 1)

4.0 wt % of ELgee neo BLUE #325 (metallic lustrous flaky particle, crushed piece of metal vapor deposition film, hue: 7.14B, manufactured by OIKE & Co., Ltd.);
0.2 wt % of Water Blue 119 (blue dye intramolecularly having -SO₃⁻M, manufactured by Orient Chemical Industries Co., Ltd.);
1.0 wt % of Diwa Red No. 106WB (red dye intramolecularly having -SO₃⁻M, manufactured by Daiwa Dyestuff Mfg. Co., Ltd.);
0.2 wt % of KELZAN AR (xanthan gum, manufactured by Sansho Co., Ltd.);
0.3 wt % of BG3810 (welan gum, manufactured by Sansho Co., Ltd.);
0.3 wt % of potassium hydroquinonesulfonate (manufactured by Wako Pure Chemical Co., Ltd.);
5.0 wt % of Joncryl PDX 7430 (acrylic emulsion, manufactured by BASF, Co., Ltd.);
1.0 wt % of Amisoft CS11 (sodium cocoylglutamate, manufactured by Ajinomoto Healthy Supply Co., Ltd.);
0.1 wt % of TSA739 (silicone defoaming agent, manufactured by Tanac Co., Ltd.);
0.2 wt % of Proxel GXL (S) (preservative containing 1,2-benzoisothiazolin-3-one, manufactured by Arch Chemical Japan Co., Ltd.);
0.2 wt % of San-ai bac sodium omadine (preservative containing sodium 2-pyridinethiol-1-oxide, manufactured by San-Ai Oil Co., Ltd.);
0.1 wt % of benzotriazole (rust inhibitor);
0.1 wt % of a glycerin solution of AKP-20 (alumina, manufactured by Sumitomo Chemical Co., Ltd.);
10.0 wt % of glycerin;
77.3 wt % of water.

Among the above components, KELZAN AR and 20.0 wt % of deionized water were mixed and stirred for 1 hour to prepare a KELZAN AR aqueous solution. Then, the remainder of the components were mixed and stirred for 2 hours, and the pH of the resulting writing/drawing material was adjusted with a 10% sodium hydroxide aqueous solution to 8.5 to obtain a glittering water-based writing/drawing material composition for a ballpoint pen.

The hue of a violet liquid composition containing Water Blue 119 and Daiwa Red No. 106WB was 5.18P. The hue difference between the hues of the metal vapor deposition film and a mixture of the dyes was 64.9° in the hue circle.

### (Example 2)

4.0 wt % of Elgee neo GREEN #325 (glittering pigment, metal vapor deposition film, hue: 5.97G, manufactured by OIKE & Co., Ltd.);
1.0 wt % of Water Blue 119 (blue dye intramolecularly having -SO₃⁻M, manufactured by Orient Chemical Industries Co., Ltd.);
0.2 wt % of Diwa Red No. 106WB (red dye intramolecularly having -SO₃⁻M, manufactured by Daiwa Dyestuff Mfg. Co., Ltd.);
0.11 wt % of KELZAN AR (xanthan gum, manufactured by Sansho Co., Ltd.);
0.3 wt % of BG3810 (welan gum, manufactured by Sansho Co., Ltd.);
2.0 wt % of potassium hydroquinonesulfonate (manufactured by Wako Pure Chemical Co., Ltd.);
10.0 wt % of Joncryl PDX 7667 (acrylic emulsion, manufactured by BASF, Co., Ltd.);
5.0 wt % of a 20% aqueous solution of a sodium salt of Phosphanol RS710 (oxyethylene alkyl ether phosphate, manufactured by TOHO Chemical Industry Co., Ltd.);
5.0 wt % of glycerin;
5.0 wt % of ethylene glycol;
0.1 wt % of TSA739 (silicone defoaming agent, manufactured by Tanac Co., Ltd.);
0.2 wt % of Proxel GXL (S) (preservative containing 1,2-benzoisothiazolin-3-one, manufactured by Arch Chemical Japan Co., Ltd.);
0.2 wt % of San-ai bac sodium omadine (preservative containing sodium 2-pyridinethiol-1-oxide, manufactured by San-Ai Oil Co., Ltd.);
0.1 wt % of benzotriazole (rust inhibitor);
0.1 wt % of a glycerin solution of AKP-20 (alumina, manufactured by Sumitomo Chemical Co., Ltd.);
66.69 wt % of water.

Among the above components, KELZAN AR and 20.0 wt % of deionized water were mixed and stirred for 1 hour to prepare a KELZAN AR aqueous solution. Then, the remainder of the components were mixed and stirred for 2 hours, and the pH of the resulting writing/drawing material was adjusted with a 10% sodium hydroxide aqueous solution to 8.0 to obtain a glittering water-based writing/drawing material composition for a ballpoint pen.

The hue of a blue liquid composition containing Water Blue 119 and Daiwa Red No. 106WB was 9.21B. The hue difference between the hues of the metal vapor deposition film and a mixture of the dyes was 83.7° in the hue circle.

### (Example 3)

2.0 wt % of Elgee neo VIOLET #150 (metallic lustrous flaky particle, metal vapor deposition film, hue: 4.11P, manufactured by OIKE & Co., Ltd.);
3.3 wt % of Diwa Red No. 106WB (red dye intramolecularly having -COO⁻M, manufactured by Daiwa Dyestuff Mfg. Co., Ltd.);
0.3 wt % of KELZAN AR (xanthan gum, manufactured by Sansho Co., Ltd.);
0.4 wt % of BG3810 (welan gum, manufactured by Sansho Co., Ltd.);
0.1 wt % of potassium hydroquinonesulfonate (manufactured by Wako Pure Chemical Co., Ltd.);
1.0 wt % of Joncryl 352D (acrylic emulsion, manufactured by BASF, Co., Ltd.);
10.0 wt % of a 20% aqueous solution of a sodium salt of NIKKOL sarcosinate OH (oleoylsarcosine, manufactured by Nikko Chemicals Co., Ltd.);
5.0 wt % of glycerin;
0.1 wt % of TSA770 (silicone defoaming agent, manufactured by Tanac Co., Ltd.);
0.2 wt % of Proxel GXL (S) (preservative containing 1,2-benzoisothiazolin-3-one, manufactured by Arch Chemical Japan Co., Ltd.);
0.2 wt % of San-ai bac sodium omadine (preservative containing sodium 2-pyridinethiol-1-oxide, manufactured by San-Ai Oil Co., Ltd.);
0.1 wt % of benzotriazole (rust inhibitor);
0.1 wt % of a glycerin solution of AKP-20 (alumina, manufactured by Sumitomo Chemical Co., Ltd.);
77.2 wt % of water.

Among the above components, KELZAN AR and 20.0 wt % of deionized water were mixed and stirred for 1 hour to prepare a KELZAN AR aqueous solution. Then, the remainder of the components were mixed and stirred for 2 hours, and the pH of the resulting writing/drawing material was adjusted with triethanolamine to 8.0 to obtain a glittering water-based writing/drawing material composition for a ballpoint pen.

The hue of a red liquid composition containing Daiwa Red No. 106WB was 2.08R. The hue difference between the hues of the metal vapor deposition film and a mixture of the dye was 64.7° in the hue circle.

### (Example 4)

8.0 wt % of Elgee neo RED #200 (metallic lustrous flaky particle, metal vapor deposition film, hue: 3.15R, manufactured by OIKE & Co., Ltd.);
17.0 wt % of Water Black 256L (14% aqueous solution of black dye intramolecularly having -SO₃⁻M and hydroxyl group, manufactured by Orient Chemical Industries Co., Ltd.);
0.2 wt % of Pemulen TR-1 (manufactured by Lubrizol Co., Ltd.);
0.1 wt % of potassium hydroquinonesulfonate (manufactured by Wako Pure Chemical Co., Ltd.);
5.0 wt % of Joncryl PDX 7430 (acrylic emulsion, manufactured by BASF, Co., Ltd.);
0.1 wt % of TSA770 (silicone defoaming agent, manufactured by Tanac Co., Ltd.);
5.0 wt % of glycerin;
0.2 wt % of Proxel GXL (S) (preservative containing 1,2-benzoisothiazolin-3-one, manufactured by Arch Chemical Japan Co., Ltd.);
0.2 wt % of San-ai bac sodium omadine (preservative containing sodium 2-pyridinethiol-1-oxide, manufactured by San-Ai Oil Co., Ltd.);
0.1 wt % of benzotriazole (rust inhibitor);
0.1 wt % of a glycerin solution of AKP-20 (alumina, manufactured by Sumitomo Chemical Co., Ltd.);
63.9 wt % of water.

Among the above components, Pemulen TR-1 and the whole deionized water were mixed and stirred for 1 hour to prepare a Pemulen TR-1 aqueous solution. Then, the remainder of the components were mixed and stirred for 2 hours, and the pH of the resulting writing/drawing material was adjusted with triethanolamine to 8.3 to obtain a glittering water-based writing/drawing material composition for a ballpoint pen.

The hue of a black liquid composition containing Water Black 256L was 2.44YR. The hue difference between the hues of the metal vapor deposition film and a mixture of the dye was 33.4° in the hue circle.

### (Example 5)

8.0 wt % of Elgee neo BLUE #325 (metallic lustrous flaky particle, metal vapor deposition film, hue: 7.14B, manufactured by OIKE & Co., Ltd.);
1.2 wt % of Diwa red No. 106WB (red dye intramolecularly having -SO₃⁻M, manufactured by Daiwa Dyestuff Mfg. Co., Ltd.);
1.2 wt % of Water Yellow 6C (yellow dye intramolecularly having -SO₃⁻M and hydroxyl group, manufactured by Orient Chemical Industries Co., Ltd.);
1.8 wt % of Diwa Blue No. 1 (blue dye intramolecularly having -SO₃⁻M, manufactured by Daiwa Dyestuff Mfg. Co., Ltd.);
0.2 wt % of Pemulen TR-1 (manufactured by Lubrizol Co., Ltd.);
0.1 wt % of potassium hydroquinonesulfonate (manufactured by Wako Pure Chemical Co., Ltd.);
5.0 wt % of Joncryl PDX 7430 (acrylic emulsion, manufactured by BASF, Co., Ltd.);
5.0 wt % of glycerin;
0.1 wt % of SAG672 (silicone defoaming agent, manufactured by Tanac Co., Ltd.);
0.2 wt % of Proxel GXL (S) (preservative containing 1,2-benzoisothiazolin-3-one, manufactured by Arch Chemical Japan Co., Ltd.);
0.2 wt % of San-ai bac sodium omadine (preservative containing sodium 2-pyridinethiol-1-oxide, manufactured by San-Ai Oil Co., Ltd.);
0.1 wt % of benzotriazole (rust inhibitor);
0.1 wt % of a glycerin solution of AKP-20 (alumina, manufactured by Sumitomo Chemical Co., Ltd.);
76.8 wt % of water.

Among the above components, Pemulen TR-1 and the whole deionized water were mixed and stirred for 1 hour to prepare a Pemulen TR-1 aqueous solution. Then, the remainder of the components were mixed and stirred for 2 hours, and the pH of the resulting writing/drawing material was adjusted with diethanolamine to 8.3 to obtain a glittering water-based writing/drawing material composition for a ballpoint pen.

The hue of a black liquid composition containing Daiwa Red No. 106WB, Water Yellow 6C, and Daiwa Blue No. 1 was 9.83PB. The hue difference between the hues of the metal vapor deposition film and a mixture of the dyes was 45.7° in the hue circle.

### (Example 6)

5.0 wt % of Elgee neo R-GOLD #500 (metallic lustrous flaky particle, metal vapor deposition film, hue: 1.90Y, manufactured by OIKE & Co., Ltd.);
0.5 wt % of Water Yellow 6C (yellow dye intramolecularly having -SO₃⁻M and hydroxyl group, manufactured by Orient Chemical Industries Co., Ltd.);
0.9 wt % of Diwa Blue No. 1 (blue dye intramolecularly having -SO₃⁻M, manufactured by Daiwa Dyestuff Mfg. Co., Ltd.);
1.8 wt % of KELZAN (xanthan gum, manufactured by Sansho Co., Ltd.);
0.2 wt % of JAGUAR HP-120 (hydroxypropyl guar gum);
0.1 wt % of hydroquinone (manufactured by Wako Pure Chemical Co., Ltd.);
5.0 wt % of glycerin;
0.1 wt % of SAG672 (silicone defoaming agent, manufactured by Tanac Co., Ltd.);
0.2 wt % of Proxel GXL (S) (preservative containing 1,2-benzoisothiazolin-3-one, manufactured by Arch Chemical Japan Co., Ltd.);
0.2 wt % of San-ai bac sodium omadine (preservative containing sodium 2-pyridinethiol-1-oxide, manufactured by San-Ai Oil Co., Ltd.);
0.1 wt % of benzotriazole (rust inhibitor);
0.1 wt % of a glycerin solution of AKP-20 (alumina, manufactured by Sumitomo Chemical Co., Ltd.);
85.8 wt % of water.

Among the above components, KELZAN and 20.0 wt % of deionized water was mixed and stirred for 1 hour to prepare a KELZAN aqueous solution. Then, the remainder of the components were mixed and stirred for 2 hours, and the pH of the resulting writing/drawing material was adjusted with a 10% sodium hydroxide aqueous solution to 9.0 to obtain a glittering water-based writing/drawing material composition for a ballpoint pen.

The hue of a green liquid composition containing Water Yellow 6C and Daiwa Blue No. 1 was 8.98G. The hue difference between the hues of the metal vapor deposition film and a mixture of the dyes was 97.5° in the hue circle.

### (Example 7)

2.0 wt % of Elgee neo YELLOW #200 (metallic lustrous flaky particle, metal vapor deposition film, hue: 5.48Y, manufactured by OIKE & Co., Ltd.);
1.7 wt % of Diwa Red 103WB (red dye intramolecularly having -COO⁻M, manufactured by Daiwa Dyestuff Mfg. Co., Ltd.);
1.7 wt % of Water Yellow 6C (yellow dye intramolecularly having -SO₃⁻M and hydroxyl group, manufactured by Orient Chemical Industries Co., Ltd.);
4.0 wt % of SANHEC HH (hydroxyethyl cellulose, manufactured by Sansho Co., Ltd.);
5.0 wt % of NIKKOL HCO100 (polyoxyethylene cured castor oil, manufactured by Nikko Chemicals Co., Ltd.);
0.8 wt % of methylhydroquinone (manufactured by Wako Pure Chemical Co., Ltd.);
5.0 wt % of glycerin;
0.2 wt % of Proxel GXL (S) (preservative containing 1,2-benzoisothiazolin-3-one, manufactured by Arch Chemical Japan Co., Ltd.);
0.2 wt % of San-ai bac sodium omadine (preservative containing sodium 2-pyridinethiol-1-oxide, manufactured by San-Ai Oil Co., Ltd.);
0.1 wt % of benzotriazole (rust inhibitor);
0.1 wt % of a glycerin solution of AKP-20 (alumina, manufactured by Sumitomo Chemical Co., Ltd.);
79.2 wt % of water.

Among the above components, SANHEC HH and 20.0 wt % of deionized water were mixed and stirred for 1 hour to prepare a SANHEC HH aqueous solution. Then, the remainder of the components were mixed and stirred for 2 hours, and the pH of the resulting writing/drawing material was adjusted with a 10% sodium hydroxide aqueous solution to 7.0 to obtain a glittering water-based writing/drawing material composition for a ballpoint pen.

The hue of an orange liquid composition containing Daiwa Red 103WB and Water Yellow 6C was 6.06YR. The hue difference between the hues of the metal vapor deposition film and a mixture of the dyes was 33.9° in the hue circle.

### (Example 8)

5.0 wt % of Elgee neo VIOLET #325 (metallic lustrous flaky particle, metal vapor deposition film, hue: 4.03P, manufactured by OIKE & Co., Ltd.);
0.2 wt % of Diwa Red 103WB (red dye intramolecularly having -COO⁻M, manufactured by Daiwa Dyestuff Mfg. Co., Ltd.);
1.2 wt % of Diwa Red 104WB (pink dye intramolecularly having hydroxyl group, manufactured by Daiwa Dyestuff Mfg. Co., Ltd.);
0.1 wt % of KELZAN AR (xanthan gum, manufactured by Sansho Co., Ltd.);
0.2 wt % of BG3810 (welan gum, manufactured by Sansho Co., Ltd.);
3.0 wt % of Amisoft CS-11 (sodium N-cocoyl-L-glutamate, manufactured by Ajinomoto Healthy Supply Co., Ltd.);
0.2 wt % of alizarin (manufactured by Wako Pure Chemical Co., Ltd.);
15.0 wt % of ethylene glycol;
0.2 wt % of Proxel GXL (S) (preservative containing 1,2-benzoisothiazolin-3-one, manufactured by Arch Chemical Japan Co., Ltd.);
0.2 wt % of San-ai bac sodium omadine (preservative containing sodium 2-pyridinethiol-1-oxide, manufactured by San-Ai Oil Co., Ltd.);
0.1 wt % of benzotriazole (rust inhibitor);
0.1 wt % of a glycerin solution of AKP-20 (alumina, manufactured by Sumitomo Chemical Co., Ltd.);
74.5 wt % of water.

Among the above components, KELZAN AR and 20.0 wt % of deionized water were mixed and stirred for 1 hour to prepare a KELZAN AR aqueous solution. Then, the remainder of the components were mixed and stirred for 2 hours, and the pH of the resulting writing/drawing material was adjusted with diethanolamine to 7.0 to obtain a glittering water-based writing/drawing material composition for a ballpoint pen.

The hue of a pink liquid composition containing Daiwa Red 103WB and Daiwa Red 104WB was 6.78RP. The hue difference between the hues of the metal vapor deposition film and a mixture of the dyes was 45.9° in the hue circle.

### (Example 9)

2.0 wt % of Elgee neo PINK #150 (metallic lustrous flaky particle, metal vapor deposition film, hue: 9.76RP, manufactured by OIKE & Co., Ltd.);
4.0 wt % of Elgee neo PINK #325 (metallic lustrous flaky particle, metal vapor deposition film, hue: 0.01R, manufactured by OIKE & Co., Ltd.);
0.5 wt % of Diwa Blue No. 1 (blue dye intramolecularly having -SO₃⁻M, manufactured by Daiwa Dyestuff Mfg. Co., Ltd.);
0.5 wt % of Diwa red No. 106WB (red dye intramolecularly having -SO₃⁻M, manufactured by Daiwa Dyestuff Mfg. Co., Ltd.);
0.8 wt % of KELZAN AR (xanthan gum, manufactured by Sansho Co., Ltd.);
3.0 wt % of Amisoft CS-11 (sodium N-cocoyl-L-glutamate, manufactured by Ajinomoto Healthy Supply Co., Ltd.);
0.2 wt % of anthrahydroquinone (manufactured by Wako Pure Chemical Co., Ltd.);
15.0 wt % of ethylene glycol;
0.2 wt % of Proxel GXL (S) (preservative containing 1,2-benzoisothiazolin-3-one, manufactured by Arch Chemical Japan Co., Ltd.);
0.2 wt % of San-ai bac sodium omadine (preservative containing sodium 2-pyridinethiol-1-oxide, manufactured by San-Ai Oil Co., Ltd.);
0.1 wt % of benzotriazole (rust inhibitor);
0.1 wt % of a glycerin solution of AKP-20 (alumina, manufactured by Sumitomo Chemical Co., Ltd.);
73.4 wt % of water.

Among the above components, KELZAN AR and 20.0 wt % of deionized water were mixed and stirred for 1 hour to prepare a KELZAN AR aqueous solution. Then, the remainder of the components were mixed and stirred for 2 hours, and the pH of the resulting writing/drawing material was adjusted with triethanolamine to 7.6 to obtain a glittering water-based writing/drawing material composition for a ballpoint pen.

The hue of a light violet liquid composition containing Daiwa Blue No. 1 and Daiwa Red No. 106WB was 2.08P. The hue difference between the hues of the ELgee neo PINK #150 and a mixture of the dyes was 63.6° in the hue circle. The hue difference between the hues of the ELgee neo PINK #325 and a mixture of the dyes was 64.5° in the hue circle.

### (Example 10)

2.0 wt % of Elgee neo GREEN #150 (metallic lustrous flaky particle, metal vapor deposition film, hue: 6.02G, manufactured by OIKE & Co., Ltd.);
3.0 wt % of Elgee neo VIOLET #200 (metallic lustrous flaky particle, metal vapor deposition film, hue: 4.03P, manufactured by OIKE & Co., Ltd.);
1.0 wt % of Water Blue 105S (blue dye intramolecularly having -SO₃⁻M, manufactured by Orient Chemical Industries Co., Ltd.);
0.2 wt % of Diwa Red No. 106WB (red dye intramolecularly having -SO₃⁻M, manufactured by Daiwa Dyestuff Mfg. Co., Ltd.);
0.52 wt % of KELZAN AR (xanthan gum, manufactured by Sansho Co., Ltd.);
0.13 wt % of BG3810 (welan gum, manufactured by Sansho Co., Ltd.);
3.0 wt % of Amisoft CS-11 (sodium N-cocoyl-L-glutamate, manufactured by Ajinomoto Healthy Supply Co., Ltd.);
0.2 wt % of potassium hydroquinonesulfonate (manufactured by Wako Pure Chemical Co., Ltd.); 15.0 wt % of ethylene glycol;
0.2 wt % of Proxel GXL (S) (preservative containing 1,2-benzoisothiazolin-3-one, manufactured by Arch Chemical Japan Co., Ltd.);
0.2 wt % of San-ai bac sodium omadine (preservative containing sodium 2-pyridinethiol-1-oxide, manufactured by San-Ai Oil Co., Ltd.);
0.1 wt % of benzotriazole (rust inhibitor);
0.1 wt % of a glycerin solution of AKP-20 (alumina, manufactured by Sumitomo Chemical Co., Ltd.);
74.35 wt % of water.

Among the above components, KELZAN AR and 20.0 wt % of deionized water were mixed and stirred for 1 hour to prepare a KELZAN AR aqueous solution. Then, the remainder of the components were mixed and stirred for 2 hours, and the pH of the resulting writing/drawing material was adjusted with a 10% sodium hydroxide aqueous solution to 7.8 to obtain a glittering water-based writing/drawing material composition for a ballpoint pen.

The hue of a blue liquid composition containing Water Blue 105S and Daiwa Red No. 106WB was 9.03B. The hue difference between the hues of the ELgee neo GREEN #150 and a mixture of the dyes was 82.8° in the hue circle. The hue difference between the hues of the ELgee neo VIOLET #200 and a mixture of the dyes was 61.0° in the hue circle.

### (Example 11)

5.0 wt % of Elgee neo SILVER #150 (metallic lustrous flaky particle, metal vapor deposition film, hue: 9.02B, manufactured by OIKE & Co., Ltd.);
0.15 wt % of Diwa red No. 106WB (red dye intramolecularly having -SO₃⁻M, manufactured by Daiwa Dyestuff Mfg. Co., Ltd.);
0.15 wt % of Water Yellow 6C (yellow dye intramolecularly having -SO₃⁻M and hydroxyl group, manufactured by Orient Chemical Industries Co., Ltd.);
0.2 wt % of Diwa Blue No. 1 (blue dye intramolecularly having -SO₃⁻M, manufactured by Daiwa Dyestuff Mfg. Co., Ltd.);
0.8 wt % of PVP K30 (polyvinyl pyrrolidone, manufactured by ISP Japan Co., Ltd.);
3.0 wt % of Amisoft CS-11 (sodium N-cocoyl-L-glutamate, manufactured by Ajinomoto Healthy Supply Co., Ltd.);
0.2 wt % of potassium hydroquinonesulfonate (manufactured by Wako Pure Chemical Co., Ltd.); 15.0 wt % of ethylene glycol;
0.2 wt % of Proxel GXL (S) (preservative containing 1,2-benzoisothiazolin-3-one, manufactured by Arch Chemical Japan Co., Ltd.);
0.2 wt % of San-ai bac sodium omadine (preservative containing sodium 2-pyridinethiol-1-oxide, manufactured by San-Ai Oil Co., Ltd.);
0.1 wt % of benzotriazole (rust inhibitor);
0.1 wt % of a glycerin solution of AKP-20 (alumina, manufactured by Sumitomo Chemical Co., Ltd.);
74.9 wt % of water.

Among the above components, PVP K30 and 20.0 wt % of deionized water were mixed and stirred for 1 hour to prepare a KELZAN AR aqueous solution. Then, the remainder of the components were mixed and stirred for 2 hours, and the pH of the resulting writing/drawing material was adjusted with a 10% sodium hydroxide aqueous solution to 7.8 to obtain a glittering water-based writing/drawing material composition for a ballpoint pen.

The hue of a greenish black liquid composition containing Water Yellow 6C and Daiwa Blue No. 1 was 8.3G. The hue difference between the hues of the metal vapor deposition film and a mixture of the dyes was 74.6° in the hue circle.

### (Example 12)

4.0 wt % of METASHINE MC1030RB (metallic lustrous flaky particle, glass flake, hue: 5.83B, manufactured by Nippon Sheet Glass Co., Ltd.);
1.25 wt % of FISCO BLUE 664 (16% aqueous solution of blue dye intramolecularly having -SO₃⁻M, manufactured by Orient Chemical Industries Co., Ltd.);
1.0 wt % of Diwa Red No. 106WB (red dye intramolecularly having -SO₃⁻M, manufactured by Daiwa Dyestuff Mfg. Co., Ltd.);
0.5 wt % of KELZAN AR (xanthan gum, manufactured by Sansho Co., Ltd.);
0.4 wt % of GENUGUM type RL-200-J (locust bean gum, manufactured by Sansho Co., Ltd.)
0.5 wt % of sodium ascorbate (manufactured by Wako Pure Chemical Co., Ltd.);
10.0 wt % of glycerin;
0.2 wt % of Proxel GXL (S) (preservative containing 1,2-benzoisothiazolin-3-one, manufactured by Arch Chemical Japan Co., Ltd.);
0.2 wt % of San-ai bac sodium omadine (preservative containing sodium 2-pyridinethiol-1-oxide, manufactured by San-Ai Oil Co., Ltd.);
0.1 wt % of benzotriazole (rust inhibitor);
0.1 wt % of a glycerin solution of AKP-20 (alumina, manufactured by Sumitomo Chemical Co., Ltd.);
81.75 wt % of water.

Among the above components, KELZAN AR and 20.0 wt % of deionized water were mixed and stirred for 1 hour to prepare a KELZAN AR aqueous solution. Then, the remainder of the components were mixed and stirred for 2 hours, and the pH of the resulting writing/drawing material was adjusted with a 10% sodium hydroxide aqueous solution to 8.5 to obtain a glittering water-based writing/drawing material composition for a ballpoint pen.

The hue of a violet liquid composition containing FISCO BLUE 664 and Daiwa Red No. 106WB was 5.29P. The hue difference between the hues of the glass flake and a mixture of the dyes was 70.1° in the hue circle.

### (Example 13)

4.0 wt % of Friend Color D851BL (metallic lustrous flaky particle, colored aluminum, hue: 5.09B, manufactured by TOYO ALUMINIUM Co., Ltd.);
0.2 wt % of Water Blue 119 (blue dye intramolecularly having -SO₃⁻M, manufactured by Orient Chemical Industries Co., Ltd.);
1.0 wt % of Diwa Red No. 106WB (red dye intramolecularly having -SO₃⁻M, manufactured by Daiwa Dyestuff Mfg. Co., Ltd.);
0.6 wt % of KELZAN AR (xanthan gum, manufactured by Sansho Co., Ltd.);
0.3 wt % of SUPER GEL 200 (guar gum, manufactured by Sansho Co., Ltd.);
0.5 wt % of stearic acid (manufactured by Wako Pure Chemical Co., Ltd.);
10.0 wt % of glycerin;
0.2 wt % of Proxel GXL (S) (preservative containing 1,2-benzoisothiazolin-3-one, manufactured by Arch Chemical Japan Co., Ltd.);
0.2 wt % of San-ai bac sodium omadine (preservative containing sodium 2-pyridinethiol-1-oxide, manufactured by San-Ai Oil Co., Ltd.);
0.1 wt % of benzotriazole (rust inhibitor);
0.1 wt % of a glycerin solution of AKP-20 (alumina, manufactured by Sumitomo Chemical Co., Ltd.);
82.8 wt % of water.

Among the above components, KELZAN AR and 20.0 wt % of deionized water were mixed and stirred for 1 hour to prepare a KELZAN AR aqueous solution. Then, the remainder of the components were mixed and stirred for 2 hours, and the pH of the resulting writing/drawing material was adjusted with a 10% sodium hydroxide aqueous solution to 8.5 to obtain a glittering water-based writing/drawing material composition for a ballpoint pen.

The hue of a violet liquid composition containing Water Blue 119 and Daiwa Red No. 106WB was 5.27P. The hue difference between the hues of the colored aluminum and a mixture of the dyes was 72.6° in the hue circle.

### (Example 14)

10.0 wt % of Elgee neo B-GOLD #200 (metallic lustrous flaky particle, metal vapor deposition film, hue: 4.76Y, manufactured by OIKE & Co., Ltd.);
5.0 wt % of Water Yellow 6C (yellow dye intramolecularly having -SO₃⁻M and hydroxyl group, manufactured by Orient Chemical Industries Co., Ltd.);
0.2 wt % of Pemulen TR-1 (manufactured by Lubrizol Co., Ltd.);
0.1 wt % of potassium hydroquinonesulfonate (manufactured by Wako Pure Chemical Co., Ltd.);
5.0 wt % of Joncryl PDX 7430 (acrylic emulsion, manufactured by BASF, Co., Ltd.);
5.0 wt % of glycerin;
0.2 wt % of Proxel GXL (S) (preservative containing 1,2-benzoisothiazolin-3-one, manufactured by Arch Chemical Japan Co., Ltd.);
0.2 wt % of San-ai bac sodium omadine (preservative containing sodium 2-pyridinethiol-1-oxide, manufactured by San-Ai Oil Co., Ltd.);
0.1 wt % of benzotriazole (rust inhibitor);
0.1 wt % of a glycerin solution of AKP-20 (alumina, manufactured by Sumitomo Chemical Co., Ltd.);
61.3 wt % of water.

Among the above components, Pemulen TR-1 and the whole deionized water were mixed and stirred for 1 hour to prepare a Pemulen TR-1 aqueous solution. Then, the remainder of the components were mixed and stirred for 2 hours, and the pH of the resulting writing/drawing material was adjusted with a 10% sodium hydroxide aqueous solution to 8.5 to obtain a glittering water-based writing/drawing material composition for a ballpoint pen.

The hue of a yellow liquid composition containing Water Yellow 6C was 8.22Y. The hue difference between the hues of the metal vapor deposition film and a mixture of the dye was 12.5° in the hue circle.

### (Example 15)

1.0 wt % of Elgee neo VIOLET #150 (metallic lustrous flaky particle, metal vapor deposition film, hue: 4.11P, manufactured by OIKE & Co., Ltd.);
3.3 wt % of Water Red 28 (manufactured by Orient Chemical Industries Co., Ltd.);
0.03 wt % of KELZAN AR (xanthan gum, manufactured by Sansho Co., Ltd.);
1.0 wt % of KELCO-CRETE DG (diutan gum, manufactured by Sansho Co., Ltd.);
0.1 wt % of potassium hydroquinonesulfonate (manufactured by Wako Pure Chemical Co., Ltd.);
1.0 wt % of Joncryl 352D (acrylic emulsion, manufactured by BASF, Co., Ltd.);
5.0 wt % of glycerin;
0.2 wt % of Proxel GXL (S) (preservative containing 1,2-benzoisothiazolin-3-one, manufactured by Arch Chemical Japan Co., Ltd.);
0.2 wt % of San-ai bac sodium omadine (preservative containing sodium 2-pyridmethiol-1-oxide, manufactured by San-Ai Oil Co., Ltd.);
0.1 wt % of benzotriazole (rust inhibitor);
0.1 wt % of a glycerin solution of AKP-20 (alumina, manufactured by Sumitomo Chemical Co., Ltd.);
87.97 wt % of water.

Among the above components, KELZAN AR and 20.0 wt % of deionized water were mixed and stirred for 1 hour to prepare a KELZAN AR aqueous solution. Then, the remainder of the components were mixed and stirred for 2 hours, and the pH of the resulting writing/drawing material was adjusted with a 10% sodium hydroxide aqueous solution to 8.0 to obtain a glittering water-based writing/drawing material composition for a brush pen.

The hue of a red liquid composition containing Water Red 28 was 6.08R. The hue difference between the hues of the metal vapor deposition film and a mixture of the dye was 79.1° in the hue circle.

### (Example 16)

4.0 wt % of Elgee neo VIOLET #325 (metal vapor deposition film, hue: 4.03P, manufactured by OIKE & Co., Ltd.);
0.4 wt % of OIL BLUE 613 (blue dye intramolecularly having hydroxyl group, manufactured by Orient Chemical Industries Co., Ltd.);
0.8 wt % of SPILON RED C-GH (red dye intramolecularly having -SO₃⁻M, manufactured by Hodogaya Chemical Co., Ltd.);
0.9 wt % of KLUCEL M (hydroxypropyl cellulose, manufactured by Sansho Co., Ltd.);
0.3 wt % of potassium hydroquinonesulfonate (manufactured by Wako Pure Chemical Co., Ltd.);
0.2 wt % of San-ai bac sodium omadine (preservative containing sodium 2-pyridinethiol-1-oxide, manufactured by San-Ai Oil Co., Ltd.);
0.1 wt % of benzotriazole (rust inhibitor);
0.1 wt % of a glycerin solution of AKP-20 (alumina, manufactured by Sumitomo Chemical Co., Ltd.);
93.2 wt % of benzyl alcohol.

Among the above components, KLUCEL M and 20.0 wt % of benzyl alcohol were mixed and stirred for 1 hour to prepare a KLUCEL M solution. Then, the remainder of the components were mixed and stirred for 2 hours, and the pH of the resulting writing/drawing material was adjusted with triethanolamine to 8.0 to obtain a glittering oil-based writing/drawing material composition for a ballpoint pen.

The hue of a violet liquid composition containing OIL BLUE 613 and SPILON RED C-GH was 2.64P. The hue difference between the hues of the metal vapor deposition film and a mixture of the dyes was 5.0° in the hue circle.

### (Comparative Example 1)

4.0 wt % of PEARL-GLAZE MRB-100RF (interference type pearl pigment in which mica is coated with titanium dioxide, hue: hue varies with measurement position and thus could not be measured accurately, interference color: red blue, manufactured by NIHON KOKEN KOGYO);
0.9 wt % of KELZAN AR (xanthan gum, manufactured by Sansho Co., Ltd.);
10.0 wt % of glycerin;
0.2 wt % of Proxel GXL (S) (preservative containing 1,2-benzoisothiazolin-3-one, manufactured by Arch Chemical Japan Co., Ltd.);
0.2 wt % of San-ai bac sodium omadine (preservative containing sodium 2-pyridinethiol-1-oxide, manufactured by San-Ai Oil Co., Ltd.);
0.1 wt % of benzotriazole (rust inhibitor);
0.1 wt % of a glycerin solution of AKP-20 (alumina, manufactured by Sumitomo Chemical Co., Ltd.);
84.5 wt % of water.

Among the above components, KELZAN AR and 20.0 wt % of deionized water were mixed and stirred for 1 hour to prepare a KELZAN AR aqueous solution. Then, the remainder of the components were mixed and stirred for 2 hours, and a glittering water-based writing/drawing material composition for a ballpoint pen with a pH of 7.2 was obtained.

### (Comparative Example 2)

4.0 wt % of Daiya Hologram S20 (embossed hologram pigment of polyethylene terephthalate with aluminum vapor deposition, hue: hue varies with measurement position and thus could not be measured accurately, manufactured by Daiya Kogyo Co., Ltd.);
0.9 wt % of KELZAN AR (xanthan gum, manufactured by Sansho Co., Ltd.);
10.0 wt % of glycerin;
0.2 wt % of Proxel GXL (S) (preservative containing 1,2-benzoisothiazolin-3-one, manufactured by Arch Chemical Japan Co., Ltd.);
0.2 wt % of San-ai bac sodium omadine (preservative containing sodium 2-pyridinethiol-1-oxide, manufactured by San-Ai Oil Co., Ltd.);
0.1 wt % of benzotriazole (rust inhibitor);
0.1 wt % of a glycerin solution of AKP-20 (alumina, manufactured by Sumitomo Chemical Co., Ltd.);
84.5 wt % of water.

Among the above components, KELZAN AR and 20.0 wt % of deionized water were mixed and stirred for 1 hour to prepare a KELZAN AR aqueous solution. Then, the remainder of the components were mixed and stirred for 2 hours, and a glittering water-based writing/drawing material composition for a ballpoint pen with a pH of 6.8 was obtained.

### (Comparative Example 3)

10.0 wt % of Iriodin 201 Rutine Fine Gold (pearl pigment, hue: 4.80Y, manufactured by Merck Japan Co., Ltd.);
3.0 wt % of Water Pink 2 (pink dye intramolecularly having hydroxyl group, manufactured by Orient Chemical Industries Co., Ltd.);
0.9 wt % of KELZAN AR (xanthan gum, manufactured by Sansho Co., Ltd.);
10.0 wt % of glycerin;
0.2 wt % of Proxel GXL (S) (preservative containing 1,2-benzoisothiazolin-3-one, manufactured by Arch Chemical Japan Co., Ltd.);
0.2 wt % of San-ai bac sodium omadine (preservative containing sodium 2-pyridinethiol-1-oxide, manufactured by San-Ai Oil Co., Ltd.);
0.1 wt % of benzotriazole (rust inhibitor);
0.1 wt % of a glycerin solution of AKP-20 (alumina, manufactured by Sumitomo Chemical Co., Ltd.);
75.5 wt % of water.

Among the above components, KELZAN AR and 20.0 wt % of deionized water were mixed and stirred for 1 hour to prepare a KELZAN AR aqueous solution. Then, the remainder of the components were mixed and stirred for 2 hours, and the pH of the resulting writing/drawing material was adjusted with a 10% sodium hydroxide aqueous solution to 8.0 to obtain a glittering water-based writing/drawing material composition for a ballpoint pen.

The hue of a violet liquid composition containing Water Pink 2 was 9.61P. The hue difference between the hues of the pearl pigment and a mixture of the dye was 126.7° in the hue circle.

### (Comparative Example 4)

9.0 wt % of Elgee neo GREEN #325 (metallic lustrous flaky particle, metal vapor deposition film, hue: 5.97G, manufactured by OIKE & Co., Ltd.);
2.0 wt % of FUJI SP BLUE 6474 (blue pigment dispersion, manufactured by Fuji Pigment Co., Ltd.);
0.9 wt % of KELZAN AR (xanthan gum, manufactured by Sansho Co., Ltd.);
10.0 wt % of glycerin;
0.2 wt % of Proxel GXL (S) (preservative containing 1,2-benzoisothiazolin-3-one, manufactured by Arch Chemical Japan Co., Ltd.);
0.2 wt % of San-ai bac sodium omadine (preservative containing sodium 2-pyridinethiol-1-oxide, manufactured by San-Ai Oil Co., Ltd.);
0.1 wt % of benzotriazole (rust inhibitor);
0.1 wt % of a glycerin solution of AKP-20 (alumina, manufactured by Sumitomo Chemical Co., Ltd.);
77.5 wt % of water.

Among the above components, KELZAN AR and 20.0 wt % of deionized water were mixed and stirred for 1 hour to prepare a KELZAN AR aqueous solution. Then, the remainder of the components were mixed and stirred for 2 hours, and the pH of the resulting writing/drawing material was adjusted with triethanolamine to 8.0 to obtain a glittering water-based writing/drawing material composition for a ballpoint pen.

The hue of a green liquid composition containing FUJI SP BLUE 6474 was 4.79B. The hue difference between the hues of the metal vapor deposition film and a mixture of the pigment was 67.8° in the hue circle.

### (Comparative Example 5)

8.0 wt % of Friend Color D851BL (metallic lustrous flaky particle, colored aluminum, hue: 5.09B, manufactured by TOYO ALUMINIUM Co., Ltd.);
0.05 wt % of Water Blue 119 (blue dye intramolecularly having -SO₃⁻M, manufactured by Orient Chemical Industries Co., Ltd.);
0.25 wt % of Diwa red No. 106WB (red dye intramolecularly having -SO₃⁻M, manufactured by Daiwa Dyestuff Mfg. Co., Ltd.);
0.9 wt % of KELZAN AR (xanthan gum, manufactured by Sansho Co., Ltd.);
0.5 wt % of stearic acid (manufactured by Wako Pure Chemical Co., Ltd.);
10.0 wt % of glycerin;
0.2 wt % of Proxel GXL (S) (preservative containing 1,2-benzoisothiazolin-3-one, manufactured by Arch Chemical Japan Co., Ltd.);
0.2 wt % of San-ai bac sodium omadine (preservative containing sodium 2-pyridinethiol-1-oxide, manufactured by San-Ai Oil Co., Ltd.);
0.1 wt % of benzotriazole (rust inhibitor);
0.1 wt % of a glycerin solution of AKP-20 (alumina, manufactured by Sumitomo Chemical Co., Ltd.);
79.7 wt % of water.

Among the above components, KELZAN AR and 20.0 wt % of deionized water were mixed and stirred for 1 hour to prepare a KELZAN AR aqueous solution. Then, the remainder of the components were mixed and stirred for 2 hours, and the pH of the resulting writing/drawing material was adjusted with diethanolamine to 8.0 to obtain a glittering water-based writing/drawing material composition for a ballpoint pen.

The hue of a blue liquid composition containing Water Blue 119 and Daiwa Red No. 106WB was 6.98RP. The hue difference between the hues of the colored aluminum and a mixture of the dyes was 132.8° in the hue circle.

### (Comparative Example 6)

Model formulation using viewing angle dependent particle
10.0 wt % of PEARL-GLAZE MRB-100RF (interference type pearl pigment in which mica is coated with titanium dioxide, hue: hue varies with measurement position and thus could not be measured accurately, interference color: red blue, manufactured by NIHON KOKEN KOGYO);
0.9 wt % of KELZAN AR (xanthan gum, manufactured by Sansho Co., Ltd.);
10.0 wt % of glycerin;
84.1 wt % of water.

Among the above components, KELZAN AR and 20.0 wt % of deionized water were mixed and stirred for 1 hour to prepare a KELZAN AR aqueous solution. Then, the remainder of the components were mixed and stirred for 2 hours, and a glittering water-based writing/drawing material composition for a ballpoint pen was obtained.

### (Comparative Example 7)

Model formulation using metallic lustrous flaky particle and dye with large hue difference
4.0 wt % of Elgee neo GREEN #150 (metallic lustrous flaky particle, metal vapor deposition film, hue: 6.02G, manufactured by OIKE & Co., Ltd.);
1.0 wt % of Water Pink 2 (pink dye intramolecularly having hydroxyl group, manufactured by Orient Chemical Industries Co., Ltd.);
0.9 wt % of KELZAN AR (xanthan gum, manufactured by Sansho Co., Ltd.);
10.0 wt % of glycerin;
84.1 wt % of water.

Among the above components, KELZAN AR and 20.0 wt % of deionized water were mixed and stirred for 1 hour to prepare a KELZAN AR aqueous solution. Then, the remainder of the components were mixed and stirred for 2 hours, and the pH of the resulting writing/drawing material was adjusted with a 10% sodium hydroxide aqueous solution to 8.5 to obtain a glittering water-based writing/drawing material composition for a ballpoint pen.

The hue of a liquid composition containing Water Pink 2 was 9.61P. The hue difference between the hues of the metal vapor deposition film and a mixture of the dye was 156.9° in the hue circle.

### (Comparative Example 8)

Model formulation using metallic lustrous flaky particle and pigment
4.0 wt % of Elgee neo GREEN #325 (metallic lustrous flaky particle, metal vapor deposition film, hue: 5.97G, manufactured by OIKE & Co., Ltd.);
8.0 wt % of FUJI SP BLUE 6474 (blue pigment dispersion, manufactured by Fuji Pigment Co., Ltd.);
0.9 wt % of KELZAN AR (xanthan gum, manufactured by Sansho Co., Ltd.);
10.0 wt % of glycerin;
77.1 wt % of water.

Among the above components, KELZAN AR and 20.0 wt % of deionized water were mixed and stirred for 1 hour to prepare a KELZAN AR aqueous solution. Then, the remainder of the components were mixed and stirred for 2 hours, and a glittering water-based writing/drawing material composition for a ballpoint pen was obtained.

The hue of a liquid composition containing FUJI SP BLUE 6474 was 4.79B. The hue difference between the hues of the metal vapor deposition film and a mixture of the pigment was 67.8° in the hue circle.

Writing/drawing material backflow prevention composition 1
95.0 wt % of Polybutene HV50 (polybutene, base material, manufactured by Nippon Petrochemicals Co., Ltd.);
3.0 wt % of Aerosil R972 (particulate silica, gelling agent, manufactured by Nippon Aerosil Co., Ltd.);
2.0 wt % of Rheopearl KL (dextrin fatty acid ester, manufactured by Chiba Flour Milling Co., Ltd.).

The above components were mixed and stirred for 2 hours at 150°C with a hot stirrer to obtain writing/drawing material backflow prevention composition 1. The viscosity at 25°C of this backflow preventer was 50000 mPa·S.

Writing/drawing material backflow prevention composition 2
94.5 wt % of LUCANT HC100 (ethylene A olefin, base material, manufactured by Mitsui Chemicals Co., Ltd.);
4.0 wt % of Aerosil R974 (particulate silica, gelling agent, manufactured by Nippon Aerosil Co., Ltd.);
1.5 wt % of Rheopearl KL (dextrin fatty acid ester, manufactured by Chiba Flour Milling Co., Ltd.).

The above components were mixed and stirred for 2 hours at 150°C with a hot stirrer to obtain writing/drawing material backflow prevention composition 2. The viscosity at 25°C of this backflow preventer was 40000 mPa·S.

### <Test ballpoint pen tip>

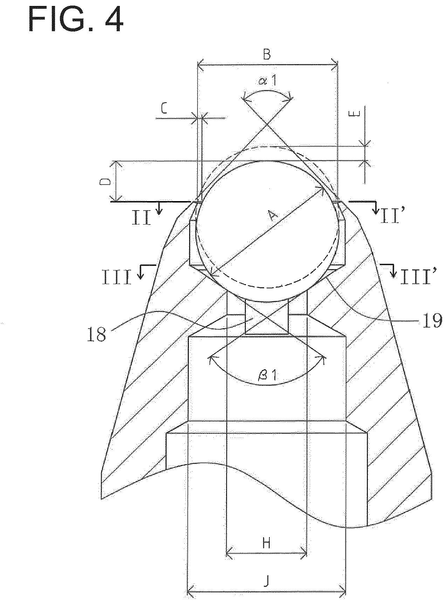

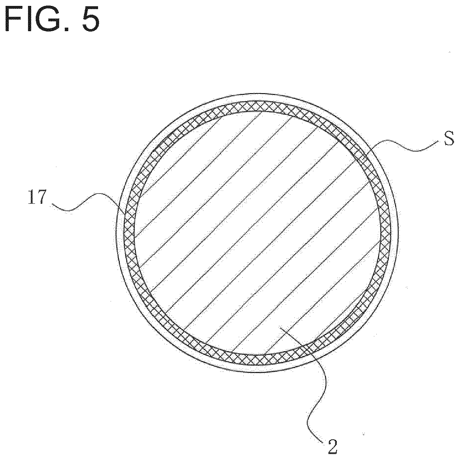

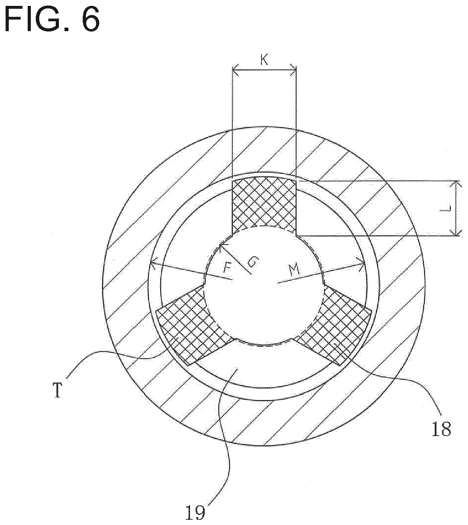

To evaluate the writing/drawing material compositions according to Examples and Comparative Examples, three types of test ballpoint pen tip for drawing were produced. Table 1 shows measurement values of the dimension of the respective test ballpoint pen tips, FIG. 4 shows measurement positions, FIG. 5 is a cross-sectional view taken along line II-II' in FIG. 4, and FIG. 6 is a cross-sectional view taken along line III-III' in FIG. 4.

Among the test ballpoint pen tips, a tapered pin (not shown) was driven into the inward projection 16 to flatten the surface of the inward projection 16 and thereby facilitate rotation of the ball in first and second ballpoint pen tips; and the ball 2 was pressed to the inward projection 16 so as to form a ball seat 19 having substantially the same curvature as the ball 2 in third ballpoint pen tip.

In FIG. 4, the dotted line represents the ball 2 in a state where the ball 2 abuts on the tip end opening 17, and a difference between the solid line and the dotted line represents movement amount E of the ball 2 in a front-back direction.

FIG. 5 shows the size of the tip end opening 17 through which the writing/drawing material is discharged from the ballpoint pen tip when the ball 2 rests on the ball seat 19. The grid region S represents the projected area of the tip end opening 17 formed between the ball 2 and the ball housing part 13.

In FIG. 6, although the ball 2 is omitted for clarity, the dotted line running alternately along the ball seat 19 and the radial groove 18 represents a portion in contact with the ball 2 when the ball 2 rests on the ball seat 19. That is, the radial groove 18 positioned outside the dotted line substantially serves as a writing/drawing material passage through which the writing/drawing material is supplied to the ball housing part 13, and the projected area of the writing/drawing material passage is represented by the grid region T. T value represents a total value of the grid regions of the multiple radial grooves 18. While in the first ballpoint pen tip and the third ballpoint pen tip, the radial groove 18 penetrates the back hole 15 as illustrated, in the second ballpoint pen tip, the radial groove 18 does not penetrate but extends to 60% of the entire length of the middle hole 14 to prevent movement of the writing/drawing material within the ballpoint pen tip when impact is applied to the product.

Table 1 shown the dimension and the area of respective portions of the first to third test ballpoint pen tips.

**(Table 1)**

| Dimension of each ballpoint pen tip | First ballpoint pen tip | Second ballpoint pen tip | Third ballpoint pen tip |
|---|---|---|---|
| Ball diameter A (unit: mm) | 1.0 | 1.0 | 1.0 |
| Tip end opening diameter B (unit: mm) | 0.980 | 0.970 | 0.980 |
| Tip end opening gap width C (unit: mm) | 0.032 | 0.041 | 0.046 |
| Ball projection length D (unit: mm) | 0.288 | 0.260 | 0.260 |
| Ball movement amount E in front-back direction (unit: mm) | 0.120 | 0.140 | 0.130 |
| Ball housing part diameter F (unit: mm) | 1.085 | 1.085 | 1.085 |
| Diameter G of contact portion between ball seat and ball (unit: mm) | 0.574 | 0.643 | - |
| Middle hole diameter H (unit: mm) | 0.560 | 0.560 | 0.560 |
| Back hole diameter J (unit: mm) | 1.100 | 1.100 | 1.100 |
| Radial groove width K (unit: mm) | 0.300 | 0.170 | 0.300 |
| Radial groove depth L in radial direction (unit: mm) | 0.262 | 0.224 | 0.262 |
| Ball seat outer peripheral circumference M (unit: mm) | 0.970 | 0.800 | 0.720 |
| Tip opening area S (unit: mm2) | 0.110 | 0.121 | 0.134 |
| Radial groove total opening area T (unit:mm2) | 0.216 | 0.136 | 0.147 |
| Swaging angle *α* (unit: degree) | 80 | 90 | 80 |
| Ball seat opening angle *β* (unit: degree) | 110 | 100 | - |

The material of the ball 2 used in all the test ballpoint pen tips was sintered ceramic mainly composed of silicon carbide (product name: Black Sapphirine, manufactured by Tsubaki Nakashima Co., Ltd.). The arithmetic mean height Ra (JIS B 0601) of the ball was 3.0 nm. The material of the ball holder used was stainless steel (product name: SE20T, manufactured by Shimomura Tokushu Seiko Co., Ltd.) with a Vickers hardness (HV) of 240.

The tip holder 5 was made of a polybutylene terephthalate resin. The minimum inner diameter of the through hole 4 extending from a back portion of the ballpoint pen tip 1 to the writing/drawing material storage tube was 1.31 mm.

As the writing/drawing material storage tube 6, a pipe formed by extrusion of a polypropylene resin was used. The inner diameter of the pipe was 2.6 mm, and the thickness of the pipe was 0.7 mm. Then, 0.6 g of the writing/drawing material and 0.1 g of the writing/drawing material backflow prevention composition were charged thereinto.

Each test ballpoint pen tip was attached into the writing/drawing material storage tube via the tip holder. For the writing/drawing materials in Examples 1 to 12 and Comparative Examples 1 to 5, a test ballpoint pen tip filled with the writing/drawing material backflow prevention composition 1 was produced. For the writing/drawing materials in Examples 13, 14, and 16 and Comparative Example 6 to 8, a test ballpoint pen tip filled with the writing/drawing material backflow prevention composition 2 was produced. The composition in Example 15 was charged into an external body having the same structure as Pentel brush, Kin no Ho (product number: XGFH-X, manufactured by Pentel Co., Ltd.) to produce a test brush pen. Then, respective writings were evaluated.

<Measurement of hue of lustrous particle>

The lustrous particle in a solid state was laid in a thickness of about 1 mm, without forming gaps, into a circular cell having a diameter of 30 mm (a cell equipped in a spectrocolorimeter, Spectrophotometer SE6000 manufactured by Nippon Denshoku Industries Co., Ltd.). A white wood-free paper (a white test paper described in JIS S 6061) was then brought into close contact with a circular end portion of the cell opposite to a measurement portion, and a Munsell value HV/C was measured three times under the conditions of C light source, 2-degree field of view, illumination 0°, light receiving 45° (circumference), and a measurement diameter of 6 mm, with the spectrocolorimeter, Spectrophotometer SE6000, manufactured by Nippon Denshoku Industries Co., Ltd., to obtain an average H value as the hue of the glittering pigment.

### <Measurement of hue of dye>

The lustrous particle was removed from each composition of Examples and Comparative Examples to prepare a test writing/drawing material composition containing only the dye as the colorant. This composition was applied onto a white wood-free paper (a white test paper described in JIS S 6061) with a 0.2-mm bar coater and then dried. With respect to the portion where the writing/drawing material was applied, a Munsell value HV/C was measured three times under the conditions of C light source, 2-degree field of view, illumination 0°, light receiving 45° (circumference), and a measurement diameter of 6 mm, with the spectrocolorimeter, Spectrophotometer SE6000, manufactured by Nippon Denshoku Industries Co., Ltd., to obtain an average H value as the hue of the dye-containing composition obtained by removing the lustrous particle from the writing/drawing material composition in each of Examples and Comparative Examples.

### <Hue difference measurement>

Using the hue circle chart of 20 colors in the Munsell color system according to "JIS Z 8712, JIS standard color chart" of the Japan industry standards (JIS), the angle of the hue difference between the average H value of the lustrous particle and the average H value of the test writing/drawing material composition from which the lustrous particle was removed and which contains only the dye as the colorant was calculated. While two angles are obtained clockwise and counterclockwise as the angle of the hue difference, the smaller angle is adopted.

### <Measurement of coverage of lustrous particle over entire drawn line>

The coverage of the metallic lustrous particle over the entire drawn line was an average of three point measurement each given by drawing a spiral line of about 10 cm per round under the conditions of a writing angle of 70°, a writing speed of 7 cm/s, a writing load of 981 mN, with pen rotation; taking a picture of the drawn line with an optical microscope (Digital microscope VHX-2000 manufactured by KEYENCE Co., Ltd.) at 400x magnification; measuring the areas of the whole drawn line and the metallic lustrous particle on the picture with an area measurement tool equipped in the measurement device; and calculating the proportion of the metallic lustrous flaky particle to the whole drawn line.

Measurement of viscosity of writing/drawing material: The viscosity was measured with a rheometer, Modular Compact Rheometer MCR302 (manufactured by Anton Paar GmbH) at a measuring temperature of 25°C, using a cone plate with a geometry of 1°/ϕ50mm at a shear rate of 0.35(1/s).

pH after transitional test: The test ballpoint pen produced under the above conditions was stored for 1 month while the ballpoint pen laid down at 50°C and 30% RH. Thereafter, the writing/drawing material within the refill was taken out to measure the pH.

### <Evaluation of writing>

A spiral line of about 10 cm per round was wrote with WRITING TESTER TS-4C-10 manufactured by Seiki Kogyo Co., Ltd., under the conditions of a writing angle of 70°, a writing speed of 7 cm/s, a writing load of 981 mN, with pen rotation. The resulting written line was subjected to the following tests.

Visual evaluation of hue: The written line perpendicularly irradiated with light from above was viewed from 0° (identical to the irradiation direction) and 45° with respect to the light irradiation direction, and the most similar hue was determined compared with the 20-hue circle in the Munsell color system.

Evaluation of viewing angle dependence: 20 persons participating in a survey were asked how the writing was perceived and asked to select an item that they feel the closest from the following 5 items. An average score of the selected items was then calculated.
1. Feeling strong viewing angle dependence (4 points);
2. Feeling viewing angle dependence (3 points);
3. Feeling little viewing angle dependence (2 points);
4. Feeling no viewing angle dependence (1 points).

When the average score is 3.1 points or more, it is judged that at least half people feel viewing angle dependence.

Evaluation of glitter: 20 persons participating in a survey were asked how the writing was perceived and asked to select an item that they feel the closest from the following 5 items. An average score of the selected items was then calculated.
1. Feeling strong glitter (4 points);
2. Feeling glitter (3 points);
3. Feeling weak glitter (2 points);
4. Feeling no glitter (1 points).

Evaluation of writing image: To compare with the written lines in Examples written on a white wood-free paper under the above conditions, the writing/drawing materials were produced based on Comparative Examples 6 to 8, and lines were written in the same conditions as in Examples. Then, 20 persons participating in a survey were asked to compare and arrange the writings in order of feeling freshness. Then, score was given based on the ranking of feeling freshness, and an average score was calculated.
1. Feeling the freshest (4 points);
2. Feeling the second fresh (3 points);
3. Feeling the third fresh (2 points);
4. Feeling the lowest fresh (1 points).

Furthermore, they were asked to select one keyword from each of the following A group and B group to investigate what brought them to that conclusion.
A group:
   1. Like morpho butterfly;
   2. Like prism;
   3. Like rainbow;
   4. Beautiful color;
   5. Like starlit sky;
   6. Interesting color;
   7. Not difference from conventional one.
B group:
   1. Feeling surprised;
   2. Feeling little surprised;
   3. Not feeling surprised;

Evaluation of glitter over time: The written line and blue scale were irradiated with direct sunlight, and when the blue scale was discolored 3 levels, the writing was perpendicularly irradiated with light from above, and the glitter of the writing viewed from the same direction as the irradiation direction was compared with the glitter before irradiated with direct sunlight to conduct relative evaluation.
2 points: Glittering as before irradiated with direct sunlight;
1 point: Weakly glittering compared with before irradiated with direct sunlight;
0 point: Writing is not glittering.

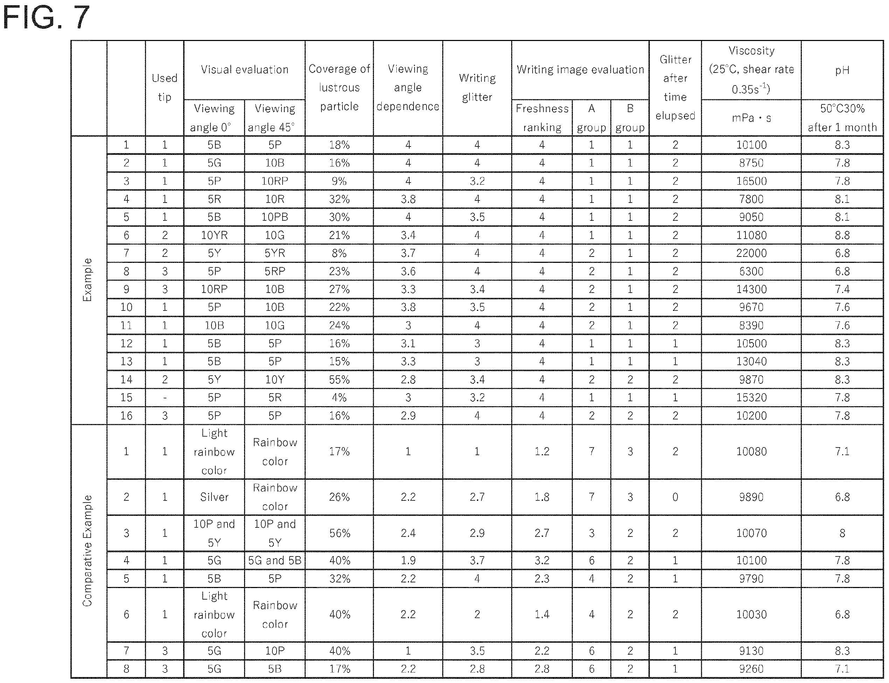

FIG. 7 is a graph showing writing evaluation results in Examples and Comparative Examples.

In Examples 1 to 16, the hue difference between the first hue, which was measured on the lustrous particle in a solid state, and the second hue, which was measured on the liquid composition obtained by removing the lustrous particle from the glittering writing/drawing material composition and applied on the white wood-free paper, was 108° or less in the hue circle in the Munsell color system, and the coverage of the lustrous particle over the surface layer of the drawing object (solid of the writing/drawing material 7) formed by the writing/drawing material composition was 1.0% or more and 70% or less. Therefore, a writing written on a white paper with a ballpoint pen filled with the composition had high chroma while keeping the writing glittering, and hue change could be achieved without incompatibility. As a result, a pleasing writing having high glitter and color tone seamlessly changing with the viewing angle so that color change is perceived depending on the viewing direction, thus being surprising and fresh like morpho butterfly or prism, was obtained.

In Examples 1 to 13, the dye intramolecularly containing at least one of a sulfo group, a carboxyl group, or a hydroxyl group made the metallic lustrous particle stably dispersed, thereby reducing a writing portion where the metallic lustrous particle was localized. Consequently, high viewing angle dependence and strong glitter were obtained.

In particular, in Examples 1 to 10 and Examples 14 to 16 where a hydroquinone was added into the writing/drawing material, the writing after time elapsed was as glittering as before irradiated with direct sunlight.

In Comparative Example 1, the addition amount of the pearl pigment was reduced to prevent the writing/drawing material from thickening due to precipitation and agglomeration of the pearl pigment in the writing/drawing material, so that the pearl pigment could not sufficiently cover the writing. As a result, glitter was poor. The hue of the writing was hard to perceive. The viewing angle dependence could not be obtained. The writing was not surprising and not different from conventional one.

In Comparative Example 2, the hologram pigment showed interference color by light reflection on its rough surface. However, the amount of the hologram pigment added into the writing/drawing material to be discharged from the tip of the ballpoint pen was not enough, so that only small amount of the hologram pigment was flatly arranged due to the rough paper surface, resulting in poor glitter. Further, although weak interference color was obtained, the viewing angle dependence was insufficient, and the writing was not surprising and not different from conventional one.

In Comparative Example 3, the writing/drawing material was produced by blending the dye and the pearl pigment having a hue difference of 108° or more and 180° or less. Thus, it merely always appeared that the colorants with different colors were mixed in the writing, and could not be perceived as a unified hue. Although the large amount of the pearl pigment made the writing glittering to some extent, the viewing angle dependence of the hue was poor, and the writing was beautiful but not too surprising.

In Comparative Example 4, the writing/drawing material was produced only using the colored metal vapor deposition film and the pigment, without adding the dye into the writing/drawing material. Thus, the different colorant colors were perceived in the writing, and an interesting writing color could be obtained. However, bright hue change depending on the viewing angle could not be obtained, and glitter was poor because a part of the blue pigment dispersion as the colorant adhered to the metallic lustrous particle. As a result, although an interesting writing in which the metallic lustrous particle sparkles in the writing of the base pigment color was obtained, the writing was not surprising.

In Comparative Example 5, the hue difference between the lustrous particle (colored aluminum) and the liquid composition from which the lustrous particle was removed (dye-based liquid composition) was 132.8° in the hue circle. Thus, although the writing was glittering like jewelry, seamless hue change depending on the viewing angle could not be obtained.

In Comparative Example 6, the writing/drawing material was produced by blending only the pearl pigment as the colorant. Thus, although the writing was glittering to some extent, the viewing angle dependence of the hue was poor, and the writing was beautiful but not too surprising.

In Comparative Example 7, the writing/drawing material was produced by blending the metallic lustrous particle and the dye having a hue difference of more than 108°. Thus, it merely always appeared that the colorants with different colors were mixed in the writing, and could not be perceived as a unified hue. The writing was interesting but not too surprising.

In Comparative Example 8, the writing/drawing material was produced only using the colored metal vapor deposition film and the pigment, without adding the dye into the writing/drawing material. Thus, the different colorant colors were perceived in the writing, and an interesting writing color could be obtained. However, bright hue change depending on the viewing angle could not be obtained, and glitter was poor because a part of the blue pigment dispersion as the colorant adhered to the metallic lustrous particle. As a result, although an interesting writing in which the metallic lustrous particle sparkles in the writing of the base pigment color was obtained, the writing was not surprising.

### Reference Signs List

- 1: Ballpoint pen tip
- 2: Ball
- 3: Ball holder
- 4: Through hole
- 5: Tip holder
- 6: Writing/drawing material storage tube
- 7: Writing/drawing material
- 8: Writing/drawing material backflow preventer
- 9: Shaft cylinder
- 10: Tail plug
- 11: Metal tip
- 12: Cap
- 13: Ball housing part
- 14: Middle hole
- 15: Back hole
- 16: Inward projection
- 17: Tip end opening
- 18: Radial groove
- 19: Ball seat
- A: Ball diameter
- B: Tip end opening diameter
- C: Tip end opening gap width
- D: Ball projection length
- E: Ball movement amount in front-back direction
- F: Ball housing part diameter
- G: Diameter of contact portion between ball seat and ball
- H: Middle hole diameter
- J: Back hole diameter
- K: Radial groove width
- L: Radial groove depth in radial direction
- M: Ball seat outer peripheral circumference
- S: Tip end opening area
- T: Radial groove total opening area
- α: Swaging angle

## Claims

1. A glittering writing/drawing material composition comprising:
a solvent;
a lustrous particle having metallic luster and dispersed in the solvent; and
at least one dye dissolved in the solvent,
wherein a hue difference between a first hue and a second hue is 108° or less in a hue circle in a Munsell color system, where the first hue is measured on the lustrous particle in a solid state with a spectrocolorimeter, and the second hue is measured on a liquid composition applied on a white wood-free paper with the spectrocolorimeter, the liquid composition being obtained by removing the lustrous particle from the glittering writing/drawing material composition, and
wherein the lustrous particle has a coverage of 1.0% or more and 70.0% or less on a surface layer of a drawing object formed by the glittering writing/drawing material composition.

2. The glittering writing/drawing material composition according to claim 1, wherein the hue difference is 5° or more in the hue circle.

3. The glittering writing/drawing material composition according to claim 1 or 2, wherein the at least one dye includes a dye intramolecularly having at least one of:
a structural part represented by -SO₃⁻M, where M is one selected from the group consisting of hydrogen ions, alkali metal ions, alkaline earth metal ions, transition metal ions, ammonium ions, and organic ammonium ions;
a structural part represented by -COO⁻M, where M is one selected from the group consisting of hydrogen ions, alkali metal ions, alkaline earth metal ions, transition metal ions, ammonium ions, and organic ammonium ions; or a hydroxyl group.

4. The glittering writing/drawing material composition according to any one of claims 1 to 3, wherein the at least one dye includes an azo dye, a disazo dye, an anthraquinone dye, a xanthene dye, a triphenylmethane dye, or an indigo dye.

5. The glittering writing/drawing material composition according to any one of claims 1 to 4, wherein the lustrous particle has a flaky shape.

6. The glittering writing/drawing material composition according to any one of claims 1 to 5, wherein the lustrous particle includes at least one of a crushed piece of a metal vapor deposition film, a glass flake, or an aluminum flake.

7. The glittering writing/drawing material composition according to any one of claims 1 to 6, wherein a content of the lustrous particle is 0.1 wt % or more and 10.0 wt % or less.

8. The glittering writing/drawing material composition according to any one of claims 1 to 7, wherein a content of the dye is 0.5 wt % or more.

9. The glittering writing/drawing material composition according to any one of claims 1 to 8, further comprising a thickener.

10. The glittering writing/drawing material composition according to claim 9, wherein the thickener at least includes one selected from the group consisting of polysaccharides, celluloses, acrylic resins, and water-soluble synthetic polymers.

11. The glittering writing/drawing material composition according to claim 9 or 10, wherein the thickener at least includes xanthan gum and welan gum.

12. The glittering writing/drawing material composition according to any one of claims 1 to 11, further comprising an antioxidant.

13. The glittering writing/drawing material composition according to claim 12, wherein the antioxidant includes a hydroquinone compound.

14. A writing/drawing instrument comprising:
a writing/drawing part; and
a writing/drawing material storage part storing a glittering writing/drawing material composed of the glittering writing/drawing material composition according to any one of claims 1 to 13,
wherein the glittering writing/drawing material is supplied from the writing/drawing material storage part to the writing/drawing part.
